(19) **Europäisches Patentamt**

**European Patent Office**

**Office européen des brevets**

(11) **EP 0 694 188 B1**

(12) **EUROPEAN PATENT SPECIFICATION**

(45) Date of publication and mention
of the grant of the patent:
**23.08.2000 Bulletin 2000/34**

(51) Int. Cl.[7]: **G06T 3/00**

(86) International application number:
**PCT/US93/03490**

(21) Application number: **93910597.9**

(22) Date of filing: **14.04.1993**

(87) International publication number:
**WO 94/24632 (27.10.1994 Gazette 1994/24)**

(54) **RESAMPLING APPARATUS SUITABLE FOR RESIZING A VIDEO IMAGE**

WIEDERBEMUSTERUNGSVORRICHTUNG INSBESONDERE ZUR AENDERUNG DER GROESSE
VON VIDEOBILDERN

APPAREIL DE REECHANTILLONNAGE ADAPTE POUR REFORMATER UNE IMAGE VIDEO

(84) Designated Contracting States:
**DE FR GB**

(43) Date of publication of application:
**31.01.1996 Bulletin 1996/05**

(73) Proprietor:
**Northshore Laboratories, Inc.
Princeton, NJ 08540 (US)**

(72) Inventors:
• **ARBEITER, James, Henry
Hopewell, NJ 08525 (US)**

• **BESSLER, Roger, Frank
Lawrenceville, NJ 08546 (US)**

(74) Representative: **Gladwin, Philip
P. Gladwin & Co
P.O.Box 650
Great Missenden, Bucks. HP16 9QT (GB)**

(56) References cited:
**EP-A- 0 460 908         WO-A-84/05001
WO-A-90/00780**

**Description**

This application corresponds to U.S. Patent Application, Serial No. 07/766,128, now U.S. Patent No. 5,355,328 issued October 11, 1994.

BACKGROUND OF THE INVENTION

1. Field of the Invention:

The present invention relates to apparatus for resampling given information originally defined by a first series of input samples to derive a second series of output samples defining the same given information, wherein the ratio of the number of input samples of the first series to the number of output samples of the second series may be either less than or greater than unity, and, more particularly, to such apparatus suitable for use in the resizing of a video image. A data transmission system for varying transmission bandwidth by downsampling using a prefilter to prevent aliasing is taught in WO 84/05001 corresponding to PCT application PCT/GB84/00193.

2. Description of the Prior Art:

For such purposes as workstation video processing, scan conversion, and scanner document preparation by means of an image scanner, it is often desirable to resample an input stream of digital-signal sample values by a predetermined improper fractional amount, in the case of signal reduction, or a predetermined proper fractional amount, in the case of signal expansion. In this regard, reference is made to the respective teachings of U.S. Patents No. 4,282,546; 4,602,285 and 4,682,301.

As known in the art, the sampling of an input stream of digital-signal sample values can be altered by the fractional amount M/L by first upsampling the digital-signal sample values by a factor of L and then downsampling the upsampled digital-signal sample values by a factor of N. In order to accomplish this, relatively complex filter means, employing digital interpolation filtering subsequent to upsampling and digital low-pass prefiltering prior to downsampling, is required.

In the case of signal expansion, where M is smaller than L, there is no problem of unwanted aliasing frequencies being created by the upsampling-downsampling processing. However, in the case of signal reduction, where M is larger than L, there is a problem of unwanted aliasing frequencies being created. In order to overcome this problem, the interpolated upsampled signal must be sufficiently bandlimited by the prefiltering to prevent downsampling by an M larger than L causing aliasing. Further, the greater the amount of downsampling (i.e., the larger M is), the larger the number of kernel-function taps is required of the digital low-pass prefilter (i.e., the prefiltering must extend over many samples), thus dictating the use of a long filter response. The cost of a long filter response is added filter complexity and ultimately, silicon real estate when the filter is implemented on a VLSI chip.

In the past, the approach taken to appropriately bandlimit an image signal prior to resampling, whether upsampling, where the sample density is to be increased, or downsampling, where the sample density is to be decreased, is to prefilter the image with an adaptive 2-dimensional filter whose bandwidth is varied according to the amount of image-size reduction/expansion desired in each of the horizontal (X) dimension and vertical (Y) dimension of the image. Two types of digital filters can be used for this purpose: 1) Finite Impulse Response (FIR), or 2) Infinite Impulse Response (IIR).

FIR filters are desirable because they are guaranteed to be stable and can have linear phase--an important property in image processing. However, FIR filters do exhibit extremely long impulse responses (large number of neighborhood samples) for low-frequency filtering. Long impulse responses mean that the tails of the filters (the weighing coefficients furthest from the center filter point) have extremely small coefficients, which means that high arithmetic precision must be used. Also, long filter responses translate into many lines of data storage if used for vertical or Y-directional filtering. Both conditions of high arithmetic precision and many storage elements implies too much hardware, and thus silicon, if integrated onto an integrated circuit.

IIR filters, on the other hand, can have relatively short responses for the equivalent bandreject capability. Unfortunately, IIR filters also can be unstable and demand the use of very high arithmetic precision in computation. Also, IIR filters almost never have linear phase. One known image resizing architecture uses an IIR filter approach. Filter coefficients are updated as a function of the resizing parameter specified. This architecture requires wide dynamic range in its arithmetic in order to guarantee a stable filter for all cases. This structure also does not exhibit good bandwidth limiting for large resampling factors. This design is, therefore, not economical for silicon integration.

Except for their longer filter response, FIR filters are to be favored because they are well behaved, stable, and have linear phase. At lower spatial frequencies, the longer filter response of FIR filters presents a problem in implementation in the prior art. However, the present invention overcomes this problem.

SUMMARY OF THE INVENTION

The present invention is directed to an improvement in apparatus for altering the sampling period of an input stream of digital-signal sample values that define D dimensional information, where D is at least one; wherein those digital-signal sample values of the input stream that define a given dimension of the information occur at a given sampling period P. The apparatus alters the given sampling period P by a factor equal to M/L, where L is a first positive integer greater in value than one and M is a second positive integer.

The improvement comprises a combination of first means and second means.

The first means, which includes interpolation filter means, is responsive to the digital-signal sample values of the input sample stream for producing a first derived sample stream of digital-signal sample values in which the given sampling period P of the input stream is multiplied directly by a factor equal to M'/CL, where C is a given positive integer and M' is smaller than CL, either $2^n(M'/CL)$ or $2^{-n}(M'/CL)$ is equal to M/L and the absolute value of n is at least equal to zero, so that the sampling period of the first derived sample stream is (M'/CL)P.

The second means, which includes octave prefiltering and sample means, is responsive to the first derived sample stream of digital-signal sample values for producing as an output a second derived sample stream of digital-signal sample values in which the first derived sampling period (M'/CL)P of the first derived sample stream is multiplied by a factor equal to either $2^n(M'/CL)$ or $2^{-n}(M'/CL)$, so that the sampling period of the second derived sample stream is (M/L)P.

BRIEF DESCRIPTION OF THE DRAWING

FIGURE 1 is a functional block diagram illustrating the resizing of a 2-dimensional input image by means of a 2-dimensional resampler;

FIGURE 2 is a functional block diagram illustrating a prior-art approach for resampling the sampling period P of an input stream of digital-signal sample values that define a given dimension of information, where the given dimension may be either the horizontal or, alternatively, the vertical dimension of a video image;

FIGURE 3 is a functional block diagram illustrating a first embodiment of the present invention's approach for resampling the sampling period P of an input stream of digital-signal sample values that define a given dimension of information, where the given dimension may be either the horizontal or, alternatively, the vertical dimension of a video image;

FIGURE 3a is a functional block diagram illustrating a second embodiment of the present invention's approach for resampling the sampling period P of an input stream of digital-signal sample values that define a given dimension of information, where the given dimension may be either the horizontal or, alternatively, the vertical dimension of a video image;

FIGURE 4 diagrammatically illustrates the digital prefiltering and downsampling by a factor of 2 of the horizontal or, alternatively, the vertical dimension of a video image by means of a five-tap digital filter;

FIGURE 4a diagrammatically illustrates the digital prefiltering and upsampling by a factor of 2 of the horizontal or, alternatively, the vertical dimension of a video image by means of a five-tap digital filter;

FIGURE 5a is a block diagram of a first implementation of a five-tap octave digital filter providing a multiplication by a factor of 2 in the vertical dimension of a video image, which first implementation is suitable for realization on a VLSI chip;

FIGURE 5b is a block diagram of a second implementation of a five-tap octave digital filter providing a multiplication by a factor of 4 in the vertical dimension of a video image, which second implementation is suitable for realization on a VLSI chip;

FIGURE 5c is a block diagram of a third implementation of a five-tap octave digital filter providing a multiplication by a factor of 8 in the vertical dimension of a video image, which third implementation is suitable for realization on a VLSI chip;

FIGURE 6a is a block diagram of a first time-division multiplex modification of the first implementation of the five-tap octave digital filter shown in FIGURE 5a providing a multiplication by a factor of 2 in the horizontal dimension of a video image, which modification is suitable for realization on a VLSI chip; and

FIGURE 6b is a block diagram of a second time-divisiion multiplex modification of the first implementation of the five-tap octave digital filter shown in FIGURE 5a providing a multiplication by a factor of 2 in the horizontal dimension of a video image, which modification is suitable for realization on a VLSI chip.

DESCRIPTION OF THE PREFERRED EMBODIMENTS

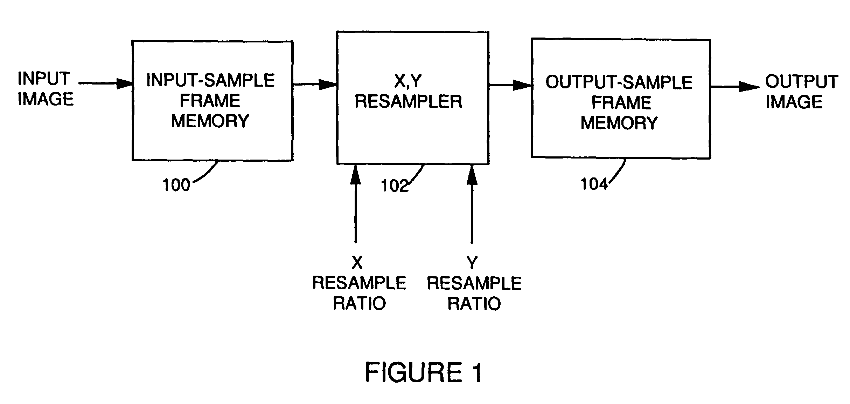

In digital image processing, it is often desirable to resize an original video image. For instance, in combining a plurality of separate input video images into a single output video image, the size of at least one of the input video images needs to be reduced. On the other hand, the size of a small portion of an input video image can be enlarged in the output video image up to the entire size of the input video image. Usually, resizing does not involve any change in aspect ratio. However, resizing may be used to change aspect ratio for special effect purposes. FIGURE 1 is directed to a digital image processor for resizing an input video image.

Referring to FIGURE 1, there is shown input-sample frame (or field) memory 100 for storing an input stream of digital-signal sample values written into thereto that define a 2-dimensional input video image, such as a television frame. As known, a temporal video signal forms a video image comprising a plurality of scan lines arranged in the vertical or Y-direction, with each scanline comprising a plurality of pixels arranged in the horizontal or X-direction. It is assumed that the video signal has been sampled at a predetermined sampling period and converted from analog to digital form to provide the input stream of digital-signal sample values stored in input-sample frame memory 100. Both the input stream of digital-signal sample values comprising the video signal defining the input video image applied to input-sample frame memory 100 and the stream of digital-signal sample values read out therefrom may be either in interlaced-scan form (e.g., an NTSC video signal) or in progressive-scan form. Further, input-sample frame memory 100, if desired, may include means for converting an interlaced-scan input to a progressive-scan prior to the readout of successive samples from input-sample frame memory 100 and their translation through X,Y resampler 102.

In principle, the readout of successive samples from input-sample frame memory 100 and their translation through X,Y resampler 102 may be either synchronous or asynchronous. However, for illustrative purposes, synchronous operation at a predetermined clock period is assumed. In this case, while the pixel sampling period, in the X-direction of the video image, of samples read out from input-sample frame memory 100 is the aforesaid predetermined clock period, the sampling period in the Y-direction of the video image is an entire scanline period (with each scanline including a large number of pixel sample values).

In order to change the size of a video image originally having a first given size to a second given size, it is necessary to independently change the sampling period in the X-direction (i.e., the pixel sampling period) and/or the sampling period in the Y-direction (i.e., the scanline sampling period). This is accomplished by X,Y resampler 102 in accordance with X and Y resample ratio control signals applied thereto, as shown. Thus, the respective pixel sampling period in the X-direction and scanline sampling period in the Y-direction of the output stream of digital-signal sample values from X,Y resampler 102, which are applied as an input to output-sample frame memory 104, are different from the respective pixel sampling and scanline sampling periods of the stream of digital-signal sample values from input-sample frame memory 100 applied as an input to X,Y resampler 102. However, from a timing point of view, it is assumed for illustrative purposes that the same predetermined clock period is employed for controlling the reading out of samples from input-sample frame memory 100, the resampling by X,Y resampler 102, and the writing in of samples to output-sample frame memory 104. In other words, it is assumed for illustrative purposes that X,Y resampler 102 employs pipeline architecture to process a stream of samples translated therethrough. The respective clock periods of the input stream of samples of the input image written into input-sample frame memory 100 and the output stream of samples of the output image read out from output-sample frame memory 104 may be the same as or different from the predetermined clock period or the same as or different from one another.

Reduction in the X size of an image causes there to be fewer pixel samples in each scanline of the resampled reduced image than the number of pixel samples in each scanline of of the original image stored in input-sample frame memory 100. Similarly, reduction in the Y size of an image causes there to be fewer scanlines of pixel samples in the resampled reduced image than the number of scanlines of pixel samples in the original image stored in input-sample frame memory 100. Thus, in the case of image size reduction, X,Y resampler 102 between its input and output performs of a sample-decreasing function.

However, expansion in the X size of an image causes there to be more pixel samples in each scanline of the resampled expanded image than the number of pixel samples in each scanline of of the original image stored in input-sample frame memory 100, and expansion in the Y size of an image causes there to be more scanlines of pixel samples in the resampled expanded image than the number of scanlines of pixel samples in the original image stored in input-sample frame memory 100. Thus, X,Y resampler 102, between its input and output, performs of a sample-decreasing function in the case of image size reduction, and performs of a sample-increasing function in the case of image size expansion.

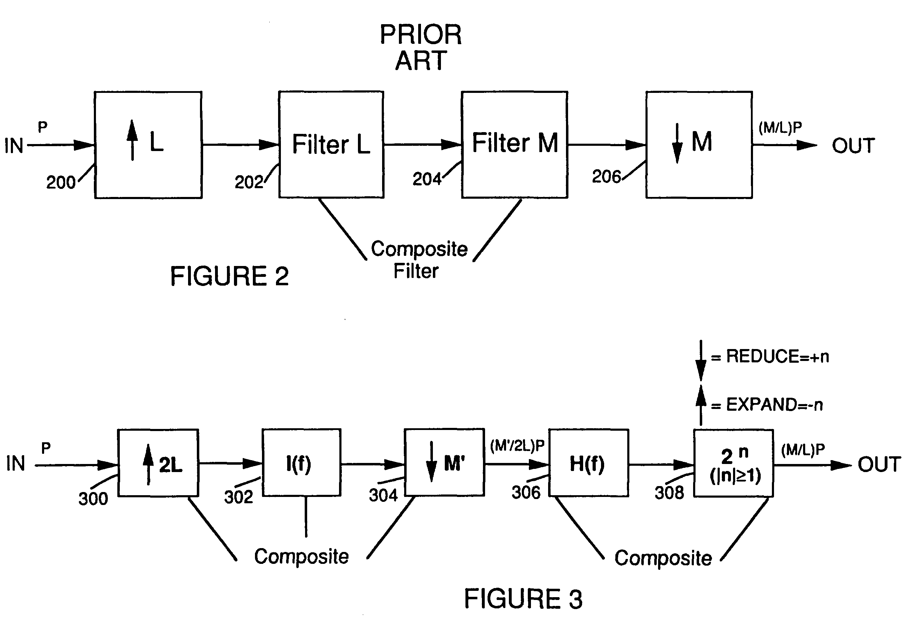

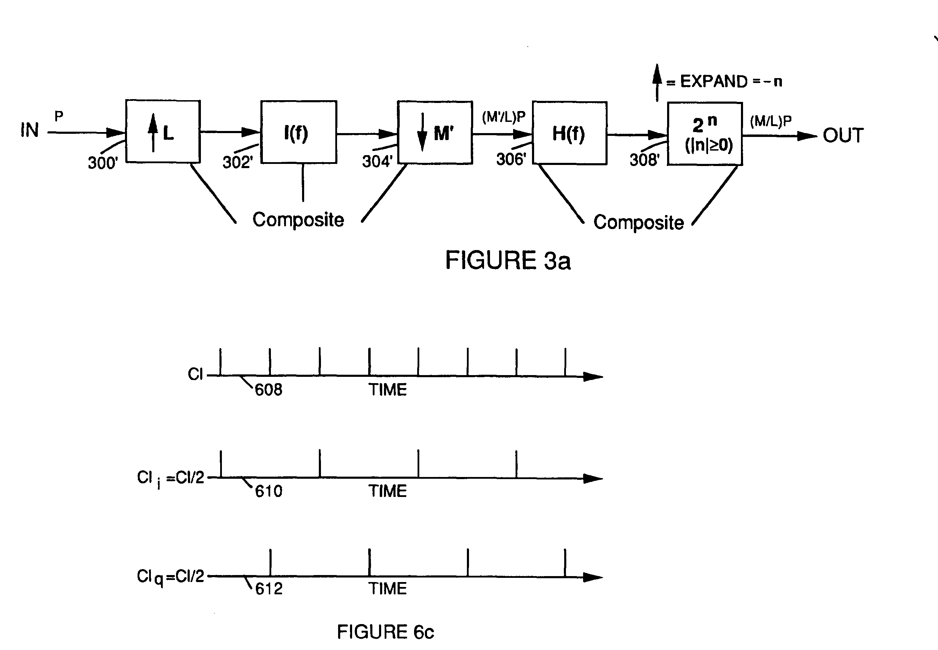

X,Y resampler 102 has available to it for sample-processing and computation purposes all of the pixel sample values stored in input-sample frame memory 100. Further, X,Y resampler 102 itself includes appropriate registers for temporarily holding computed sample values during processing. For illustrative purposes, it is assumed in FIGURES 2, 3 and 3a, described below, that all processing by X,Y resampler 102 takes place serially in pipeline fashion at a single clock rate. However, it should be understood that, in practice, processing of pixel samples by X,Y resampler 102 may take place in parallel and/or at more than one clock rate.

FIGURE 2 is a functional block diagram illustrating the approach employed by the resampler of the prior-art for altering either the pixel sampling period in the X-direction in accordance with the X resample ratio or, alternatively, the scanline sampling period in the Y-direction in accordance with the Y resample ratio. Specifically, it is assumed that the input sampling period P is to be altered by a factor K equal to M/L, where M/L may be either a proper fraction (M being a positive integer smaller than a positive integer L) or an improper fraction (M being larger than L). In the resizing of a video image by expanding a smaller sized image into a larger sized image, M/L is a proper fraction, while in the resizing of a video image by reducing a larger sized image into a smaller sized image, M/L is an improper fraction.

As indicated by block 200, the input is first upsampled by the factor L. By way of example, this can be accomplished by inserting (L-1) zero-valued samples between each pair of consecutive input sample values. Filter L (202) is an adaptable digital filter effective in substituting an appropriately interpolated value of that pair of consecutive input sample values for each of the (L-1) zero-valued samples. It should be understood that no additional information is gained by this upsampling process, since the only available source of information is contained in the input stream of sample values. Thus, the upsampling merely results in oversampling.

Filter M (204) is an adaptable digital bandlimiting prefilter having a cutoff that substantially rejects all baseband frequency components having frequency periods less than one-half the output sampling period (M/L)P. The output from filter M (204) is then downsampled by a factor M, as indicated by block 206, to derive an output stream of samples having an output sampling period (M/L)P. In practice, the separate functions performed by filter L and filter M may be combined into a single composite filter structure, as indicated in FIGURE 2.

If the resampler were limited to the case in which M<L, the downsampling of the upsampled stream could be done directly, without need for filter M (204), because, in this case, the output downsampled stream sample density is greater than that of the input upsampled stream. Therefore, no information defined by the input upsampled sample values can be lost and no aliasing can occur. However, the resampler must also be able to take care of the case in which M>L, wherein the output downsampled stream sample density is smaller than that of the input upsampled stream, resulting in undersampling of the output downsampled stream. In this latter case information defined by one or more input sample values can be lost and aliasing can occur. Therefore, filter M must be designed to minimize aliasing under the largest ratio of M/L that resampler 102 can handle. This requires relatively complex and costly M filters in order to ensure that substantially all baseband frequency components having frequency periods less than one-half the output sampling period (M/L)P are removed in all cases before downsampling by M. In addition, the transfer characteristic of the M filter should be designed to introduce substantially no phase and other types of distortion in the signal passed therethrough.

FIGURE 3 is a functional block diagram illustrating the approach employed by a first embodiment of the resampler of the present invention for altering either the pixel sampling period in the X-direction in accordance with the X resample ratio or, alternatively, the scanline sampling period in the Y-direction in accordance with a Y resample ratio. As in the case of FIGURE 2, it is assumed in the first embodiment shown in FIGURE 3 that the input sampling period P is to be altered by a factor K equal to M/L, where M/L may be either a proper fraction (M being a positive integer smaller than a positive integer L) for expansion in the X or Y size of an image or an improper fraction (M being larger than L) for reduction in the X or Y size of an image.

As indicated by block 300, interpolator I(f) 302 and block 304 (which, as indicated in FIGURE 3, may be implemented, in practice, in composite form), the input is effectively upsampled by the factor 2L with interpolated digital sample values and directly downsampled by the factor M', thereby to produce a first derived sample stream having a period equal to (M'/2L)P. M' is an integer having a value smaller than that of 2L (so that M'/2L is always a proper fraction), in which the value of M' is chosen so that the value of either $2^n(M'/CL)$ or $2^{-n}(M'/CL)$ is equal to the value of M/L.

As in FIGURE 2, the input may be first upsampled by the factor 2L by inserting (2L-1) zero-valued samples between each pair of consecutive input sample values (as indicated by block 300) prior to appropriately interpolated values of that pair of consecutive input sample values being substituted for each of the (2L-1) zero-valued samples (as indicated by block 302), and then be downsampled by the factor M' (as indicated by block 304). However, unless the value of the proper fraction M'/2L happens to be a very small fraction, this is an inefficient approach to deriving the factor M'/2L. Specifically, because the downsampling in FIGURE 3 is direct (i.e., no prefiltering is required prior to downsampling by the factor M in the resampler approach of the present invention shown in FIGURE 3), makes it possible to divide a longer period interval, that is equal in length to M times the input period P, into a series of oversampled periods equal in length to 1/2L of this longer period and then insert appropriately interpolated values for each oversampled period of this series.

For instance, assume that M=5 and L=4, so that M/L=5/4 . Therefore, in this case, M'/2L=5/8 . Assume further that six successive samples of the input sample stream, occurring with a sample period P have the respective sample values $v_1$, $v_2$, $v_3$, $v_4$, $v_5$ and $v_6$. In this case, the respective upsampled interpolated sample values, occurring with a sample period 5P/8 (assuming linear interpolation), are $v_1$,

$v_1 + 5/8(v_2 - v_1)$ ,
$v_2 + 1/4(v_3 - v_2)$ ,
$v_2 + 7/8(v_3 - v_2)$ ,
$v_3 + 1/2(v_4 - v_3)$ ,
$v_4 + 1/8(v_5 - v_4)$ ,
$v_4 + 3/4(v_5 - v_4)$ ,
$v_5 + 3/8(v_6 - v_5)$ and $v_6$. Thus, this process converts each group of six successive samples of the input sample stream into a group of nine successive interpolated-value samples, which occur serially at the same single clock rate as the group of six successive samples, in accordance with the aforesaid illustrative assumption. However, it should be understood that, in practice, the interpolation function need not be linear.

As discussed above in connection with FIGURE 2, it is necessary in the prior-art resampler approach to prefilter before downsampling by M can take place. Therefore, direct downsampling of the upsampled samples is not possible. This means that upsampling in the prior-art resampler approach requires that (L-1) interpolated sample values be inserted between each pair of consecutive sample values of the input sample stream. If L=4, as assumed above, the respective upsampled interpolated sample values in the prior-art resampler approach, occurring with a sample period P/4 (assuming linear interpolation), are $v_1$,

$v_1 + 1/4(v_2 - v_1)$,

$v_1 + 1/2(v_2 - v_1)$,

$v_1 + 3/4(v_2 - v_1)$ and $v_2$.

It is plain from the above discussion that the ability to directly downsample makes it possible to increase the difference between the respective sample values of successive interpolated samples, so long as the value of M is not too much smaller than the value of 2L, which is usually the case in practice. This is a desirable feature of the present invention.

Returning to FIGURE 3, the first derived stream of sample values, which have a sample period equal to (M'/2L)P, are prefiltered by digital octave filter H(f) 306 and multiplied by $2^n$ means 308, where n has an absolute value of at least one, thereby producing as an output a second derived stream of sample values having a period equal to (M/L)P. As indicated in FIGURE 3, the separate functions performed by digital octave filter H(f) 306 and $2^n$ means 308, in practice, may be combined in a single composite structure. Further, as indicated by the arrows situated above $2^n$ means 308, $2^n$ means 308 performs the function (1) of decreasing (downsampling) the number of samples in the second derived stream of sample values in the case of reduction in the size of an image when n has a positive value, thereby causing the sample period to be increased, and (2) of increasing (upsampling) the number of samples in the second derived stream of sample values in the case of expansion in the size of an image when n has a negative value, thereby causing the sample period to be decreased.

As discussed above, in the first embodiment shown in FIGURE 3 the resampling ratio M/L may be either a proper fraction (in the expansion of the size of an image) or may be an improper fraction (in the reduction of the size of an image). Further, in the case of image expansion (M<L), in which the insertion of interpolation coefficients involves oversampling, no problem of aliasing exists. Therefore, it is not necessary to upsample by the factor 2L with interpolated digital sample values before directly downsample by the factor M', as described above in connection with FIGURE 3.

The fact is that upsampling by the factor 2L doubles the number of interpolated pixel values that need to be computed and inserted into the data stream during each scanline period, which number may be quite large when the image size defined by a small portion of each successive scanline is expanded to the size of each entire successive scanline. In the case of real-time processing, this creates a practical problem in implementation. One obvious solution is to employ a system clock at twice the frequency so that all required computations can be made within the time span of each successive scanline period. However, this causes additional heating of the circuitry, which is particularly undesirable in a VLSI implementation. Another obvious solution is to employ additional computer elements operating in parallel. However, this increases the cost of implementation.

Because upsampling by the factor 2L is not required for image size expansion (but only for image size reduction), doubling the number of interpolated pixel values that need to be computed and inserted into the data stream during each scanline period and the real-time processing problem in implementation created thereby is avoided in the expansion case by only upsampling by a factor of L, rather than by a factor of 2L. FIGURE 3a is a functional block diagram illustrating the approach employed by a second embodiment of the resampler of the present invention that is limited to the expansion case in which M<L.

As indicated in FIGURE 3a by block 300', interpolator I(f) 302' and block 304' (which, as indicated in FIGURE 3a, may be implemented, in practice, in composite form), the input is effectively upsampled by the factor L with interpolated digital sample values and directly downsampled by the factor M', thereby to produce a first derived sample stream having a period equal to (M'/L)P. M' is an integer having a value smaller than that of L (so that M'/L is always a proper fraction), in which the value of M' is chosen so that the value of $2^{-n}(M'/L)$ is equal to the value of M/L.

More specifically, in FIGURE 3a, the first derived stream of sample values, which have a sample period equal to (M'/L)P, are prefiltered by digital octave filter H(f) 306' and multiplied by $2^{-n}$ means 308', where n has an absolute value of at least zero, thereby producing as an output a second derived stream of sample values having a period equal to (M/L)P. As indicated in FIGURE 3a, the separate functions performed by digital octave filter H(f) 306 and $2^n$ means 308', in practice, may be combined in a single composite structure. Further, as indicated by the arrow situated above $2^n$ means 308', $2^n$ means 308' performs the function of only increasing (upsampling) the number of samples in the second derived stream of sample values because means 308' is used only in the case of expansion in the size of an image. In this case n always has a negative value.

As known, a digital octave filter is a symmetrical multitap filter having a low-pass kernel weighting function characteristic defined by the respective multiplier coefficient values thereof. In principle, the number of taps of the symmetrical multitap filter may be either odd or even. However, in practice, it is preferred that the multitap filter have an odd number of taps so that the respective multiplier coefficient values can be symmetrically disposed about a central multiplier coefficient value of the kernel weighting function. It is usual for the value of each multiplier coefficient of a low-pass kernel weighting function to become smaller in accordance with the distance of that multiplier coefficient from the central multiplier coefficient.

For illustrative purposes, it is first assumed that in FIGURES 3 and 3a the symmetrical multitap filter is a 5-tap digital filter having a low-pass kernel weighting function characteristic defined by the five multiplier coefficient values c, b, a, b and c. Generally, in both FIGURES 3 and 3a, these multiplier coefficient values meet both of the two above-described constraints. In order to meet the first constraint, $a+2b+2c=1$. In order to meet the second constraint, $a+2c=2b$. The result is that $b=1/4$ and $a=1/2-2c$. By way of an example if $c=1/16$, $b=1/4$ and $a=3/8$. However, in the special case in which the second embodiment of FIGURE 3a is employed to provide an expansion greater than 1 but less than 2 (i.e., $1/2<M/L<1$),--so that the n value of $2^n$ means 308' is zero (i.e., no upsampling is required)--the five multiplier coefficient values c, b, a, b and c have the respective values 0, 0, 1, 0 and 0.

For example, consider the special case in which it is desired to provide an expansion of 1.5 (i.e., $(M/L)P=2^0(M'/L)P=(1*2/3)P=2P/3$). In this example, the respective interpolated sample values of the first derived stream of sample values M'/L, occurring with a sample period 2P/3 (assuming linear interpolation), for deriving are $v_1$, $v_1+2/3(v_2-v_1)$, $v_2+1/3(v_3-v_2)$ and $v_3$. This first derived stream of sample values are applied as an input to filter 306', the five multiplier coefficient values of filter 306' are set to have the respective values 0, 0, 1, 0 and 0, and the value n of $2^n$ means 308' is set to 0, so that $2^n=2^0=1$. Therefore, in the special case, the second derived stream of sample values, (M/L)P, at the output of means 308', remain the same as the first derived stream of sample values, (M'/L)P, at the input of $2^n$ means 308'. Therefore, no multiplication takes place in the special case. Thus, in the above example, in which $(M/L)P=(M'/L)P=2P/3$, image expansion of 1.5 results.

However, in the more general case of performing the function of image expansion by a factor M of more than two (e.g., 3.6 by way of an example), M'/L is made equal to $M/2^nL$ ($3.6/2^1=3.6/2=1.8$ in the above example) and $2^n$ means 308' of FIGURE 3a upsamples the first derived stream of sample values by a factor of $2^n$ ($2^1=2$ in the above example). In a similar manner, the first derived stream of sample values M'/2L is upsampled by $2^n$ means 308 of FIGURE 3 by a factor of $2^n$ in the case of performing the function of image expansion. However, in the case of performing the function of image reduction, $2^n$ means 308 of FIGURE 3 downsamples the first derived stream of sample values M'/2L by a factor of $2^n$.

As described above, the input samples are upsampled by a factor of 2L in the first embodiment shown in FIGURE 3 and are upsampled by a factor of L in the second embodiment shown in FIGURE 3a. In principle, however, the upsampling in FIGURE 3 could be by any factor CL, where C is a given positive integer of at least two, in which case $2^n(M'/CL)$ is equal to M/L and the absolute value of n is at least equal to one. Similarly, the upsampling in FIGURE 3a could be by any factor CL, where C is a given positive integer of at least one, in which case $2^n(M'/CL)$ is equal to M/L and the absolute value of n is at least equal to zero. It will be understood that a value for C of two, in the case of FIGURE 3, and a value for C of one in the case of FIGURE 3a, minimizes the number of interpolated values that need be computed and, therefore, is more efficient than the use of a higher given positive integer for C would be.

Conventional filtering of a stream of digital sample values with a 5-tap digital filter requires delay means that provides a total of 4 sampling periods of delay. This is so because only the fifth-occurring one of five successively-occurring samples of the stream can be operated on by the filter in real time, so that it is necessary to store each of the four preceding ones of five successively-occurring samples in order for all of these five samples to be available for summing concurrently. Thus, assuming filter 306 of FIGURE 3 or filter 306' of FIGURE 3a to be a conventional 5-tap digital filter, the delay means of filter 306 or 306' must provide a total delay of (4M'/2L)P, or (2M'/L)P, sampling periods in the case of FIGURE 3, and of (4M'/L)P sampling periods in the case of FIGURE 3a, where P is the sampling period of the input stream to filter 306 or 306'. In the resizing of a video image, P may represent the relatively short pixel sampling period in the horizontal (X) direction of the video image or, alternatively, the relatively long scanline sampling period in the vertical (Y) direction of the video image.

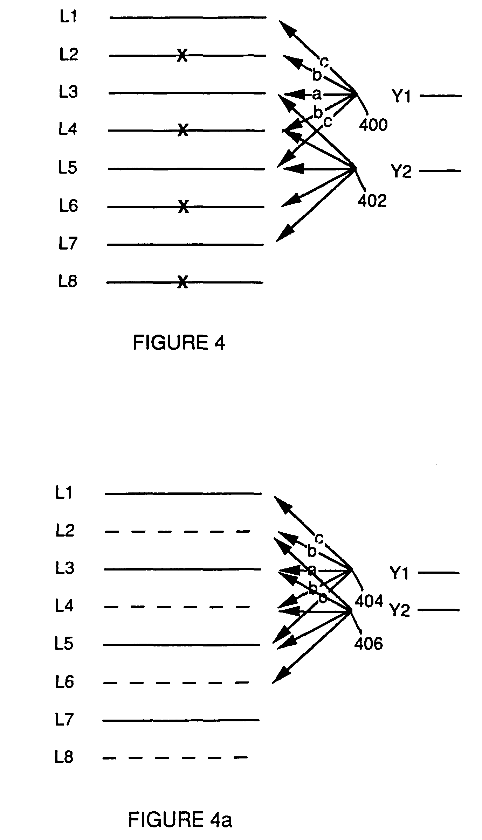

Referring to FIGURE 4, there is shown a known manner by which downsampling by a factor of 2 in the output signal from a 5-tap digital filter is usually achieved. In FIGURE 4, it is assumed for illustrative purposes that relatively long scanline sampling periods in the vertical (Y) direction of the video image are being considered. L1, L2......L7 and L8 indicate eight successive relatively long horizontal scan lines of the video image (with each scanline comprising a large number of pixel sample values) defined by the first derived stream of sample values applied as an input to filter 306 of FIGURE 3. Since filter 306' of FIGURE 3a is used only for upsampling, FIGURE 4 does not apply to filter 306'.

In the prior art, the structure of a 5-tap digital filter includes 4 serially-connected delay means, each of which provides 1 scanline period of delay, to which each of successive input scan lines L1, L2......L7 and L8 is applied, in turn, as an input to the first delay line. Each of the 4 delay lines includes a tap at its output and, in addition, the first delay line includes a tap at its input. Each pixel sample value of a line is multiplied by an appropriate one of kernel-function multiplier coefficients c,b,a,b,c either before being applied as an input to the first delay line or, alternatively, after it emerges from each of the five delay line taps. In any case, all of the corresponding pixel sample values of a set of 5 successive scan lines concurrently emerging from the 5 delay-line taps (after each of them has been multiplied by an appropriate one of kernel-function multiplier coefficients c,b,a,b,c) are summed to derive a 5-tap filtered output pixel sample value.

Specifically, in FIGURE 4, the filtered output schematically indicated by solid-arrows 400, corresponding to central input line L3 of the filter, represents the sum of each of corresponding pixel sample values of input lines L1 to L5 times its own particular kernel-function multiplier coefficient c,b,a,b,c, shown in FIGURE 4. These corresponding pixel sample values of lines L1 to L5 appear at the respective five taps of the 5-tap filter, with L1 having been delayed by 4 scanline periods, L2 having been delayed by 3 scanline periods, L3 having been delayed by 2 scanline periods, L4 having been delayed by 1 scanline period, and L5 being undelayed (i.e., occurring in real time). Two scanline periods later, the filtered output schematically indicated by solid-arrows 402, corresponding to central input line L5 of the filter, represents the sum of each of corresponding pixel sample values of input lines L3 to L7 times its own particular kernel-function multiplier coefficient c,b,a,b,c. At this time, these corresponding pixel sample values of lines L3 to L7 appear at the respective five taps of the 5-tap filter. In a similar manner, respective filtered outputs may be derived corresponding to each successive odd central input line of the filter (e.g., L7, L9, L11...). Downsampling of scan lines by a factor of 2 is achieved by not deriving filtered outputs corresponding to the even central input lines of the filter (e.g., L2, L4, L6, L8...), marked by an "X".

Referring to FIGURE 4a, there is shown a manner by which upsampling by a factor of 2 in the output signal from a 5-tap digital interpolation filter may be achieved by first inserting an additional input line following each original input line and then sequentially applying the input lines to the 5 taps of the digital filter. Each of the additional input lines (e.g.,L2, L4, L6 and L8 shown as dashed lines in FIGURE 4a) consists solely of zero-valued samples. In FIGURE 4a the filtered output schematically indicated by solid-arrows 404, corresponding to central input line L3 of the filter, represents the sum of each of corresponding pixel sample values of input lines L1 to L5 times its own particular kernel-function multiplier coefficient c,b,a,b,c. Since all the sample values of input lines L2 and L4 are zero, the filtered output corresponding to central input line L3 of the filter, represents the sum of each of corresponding pixel sample values of only input lines L1, L3 and L5 times its own particular kernel-function multiplier coefficient c,a,c. Further, the filtered output schematically indicated by solid-arrows 406, corresponding to central input line L4 of the filter, represents the sum of each of corresponding pixel sample values of input lines L2 to L6 times its own particular kernel-function multiplier coefficient c,b,a,b,c. Since all the sample values of input lines L2, L4 and L6 are zero, the filtered output corresponding to central input line L4 of the filter, represents the sum of each of corresponding pixel sample values of only input lines L3 and L5 times its own particular kernel-function multiplier coefficient b,b. Generalizing, only kernel-function multiplier coefficients c,a,c are employed in computing the filtered output value corresponding to each odd central input line higher than L3, and only kernel-function multiplier coefficients b,b are employed in computing the filtered output value corresponding to each even central input line higher than L4.

The problem with the prior-art structure discussed above in connection with FIGURES 4 and 4a is that it requires a large number (i.e., a total of at least four) relatively long scanline period delay means to provide an octave prefilter with a downsampling of 2, with effective 5-tap filter integration of input sample values in each output sample value. In order to accomplish a downsampling or upsampling of 4 or 8 (i.e., a larger power of 2), one can either cascade several such downsampling or upsampling-of-2 structures or, alternatively, employ an octave prefilter with a much larger number of taps. In either case, the number of required relatively long scanline period delay means increases rapidly.

The present invention, in part, is directed to octave prefilter structures, which, like the prior-art approach discussed above, are capable of effective 5-tap filter integration of input sample values in each output sample value, but which requires only two scanline period delay means to provide multiplication by $2^n$, for downsampling, or $2^{-n}$, for

upsampling, regardless of the value of n. Thus, n in FIGURE 3 may be 1, 2, 3, or even higher to provide multiplication by 2, 4, 8, or even higher for downsampling, and in FIGURE 3a may be -1, -2, -3, or even lower to provide multiplication by 1/2, 1/4, 1/8, or even lower for upsampling. The octave prefilter structures of the present invention make it possible to implement a resampler of the type disclosed in FIGURE 3 or 3a, such as a video-image resizer, on a VLSI chip.

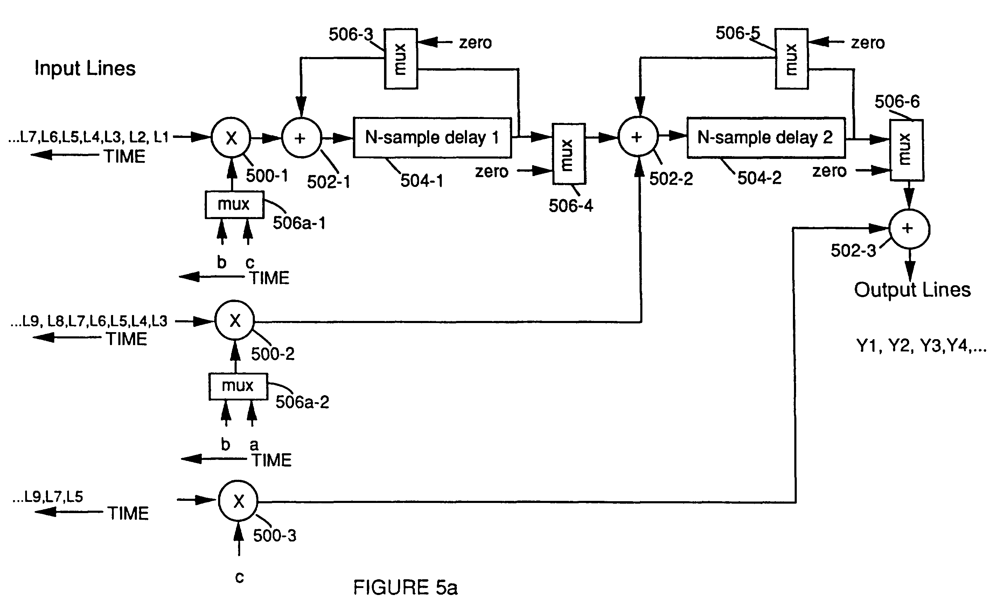

Referring now to FIGURE 5a, there is shown a first 5-tap octave prefilter structure of the present invention which is capable in a first mode of operation of providing downsampling by a factor of 2, in a second mode of operation of providing upsampling by a factor of 2, and in a third mode of operation of being transparent by providing a factor of 1 between its inputs and output. This octave prefilter structure, which derives a single output stream of sample values derived from three separate input streams of sample values, comprises the three multipliers 500-1, 500-2 and 500-3; the three summers 502-1, 502-2, and 502-3; the two N-sample delay means 504-1 and 504-2; and the six 2-input multiplexers (mux) 506a-1, 506a-2, 506-3, 506-4, 506-5 and 506-6. FIGURE 5a specifically shows the 5-tap octave prefilter structure thereof operating in its first (downsampling) mode. However, as will be described later below, by modifying the inputs thereto and the timing control thereof, the same 5-tap octave prefilter structure of FIGURE 5a may be operated in its second (upsampling) mode or in its third (transparent) mode.

As indicated in FIGURE 5a, starting with input line L1, multiplier 500-1 receives, in turn, as a multiplicand each of all the successive input lines L1, L2....L6, L7..... of sample values, and receives as a multiplier the mux 506a-1 input kernel-function coefficient c or b then appearing at the output of mux 506a-1. Starting with input line L3, multiplier 500-2 receives, in turn, as a multiplicand each of all the successive input lines L3, L4....L8, L9.... of sample values, and receives as a multiplier the mux 506a-2 input kernel-function coefficient a or b then appearing at the output of mux 506a-2. Starting with input line L5, multiplier 500-1 receives, in turn, as a multiplicand each of all the successive odd-numbered input lines L5, L7, L9.... of sample values, and receives as a multiplier the kernel-function coefficient c. In general, each of the successive input lines L1...L9... comprises N sample values, where N may be any positive integer. However, for illustrative purposes, it is assumed that each of these successive input lines is a scanline of a video image, occupying a scanline period, and N is the number of pixel sample values in such a scanline period.

The output of multiplier 500-1 is applied as a first input to summer 502-1 and the output of summer 502-1 is applied as an input to first N-sample delay means 504-1. The output of first N-sample delay means 504-1 is applied both as a first input to mux 506-3 and as a first input to mux 506-4. A zero value is applied as a second input to both mux 506-3 and mux 506-4. The output of mux 506-3 is applied as a second input to summer 502-1 and the output of mux 506-4 is applied as a first input to summer 502-2. The output from multiplier 500-2 is applied as a second input to summer 502-2 and the output from summer 502-2 is applied as an input to second N-sample delay means 504-2. The output from second N-sample delay means 504-2 is applied both as a first input to mux 506-5 and as a first input to mux 506-6. A zero value is applied as a second input to both mux 506-5 and mux 506-6. The output from mux 506-5 is applied as a third input to summer 502-2 and the output from mux 506-6 is applied as a first input to summer 502-3. The output from multiplier 500-3 is applied as a second input to summer 502-3 and the output from summer 502-3 comprises the output lines Y1, Y2, Y3, Y4..... derived by the first 5-tap octave prefilter structure of the present invention, shown in FIGURE 5a.

In addition to the structure shown in FIGURE 5a, in practice, each multiplier and summer includes an individual sample latch (not shown) at each of its inputs and at its output, with each latch introducing a one sample delay in the flow of data. Further, in practice, suitable timing and control circuitry (not shown) is provided for controlling the flow of data through the octave prefilter structure shown in FIGURE 5a. The flow of this data through the octave prefilter structure shown in FIGURE 5a will now be discussed.

All the 2-input mux switch back and forth between their 2 inputs at the end of each scanline period. The initial setting of mux 506a-1 is such that it is in its c-coefficient input state during the occurrence of each odd input line, starting with input line L1, and the initial setting of mux 506a-2 is such that it is in its a-coefficient input state during the occurrence of each odd input line, starting with input line L3. The settings of mux 506-3 and 506-5 are such that the respective outputs of first and second N-sample delay means 504-1 and 504-2 are recirculated only during even input-line scanline period cycles of operation and zero values are normally recirculated during all odd input-line scanline period cycles of operation (although, in principle, it is not absolutely essential that mux 506-3 and 506-5 be in their zero value state during those odd input-line scanline period cycles of operation--such as during the 1st cycle--where it is known a priori that no sample values can be emerging from the respective outputs of first and second N-sample delay means 504-1 and 504-2). The settings of mux 506-4 and 506-6 are such that the respective outputs of first and second N-sample delay means 504-1 and 504-2 are translated therethrough to the first input of respective summers 502-2 and 502-3 only during odd input-line scanline period cycles of operation and zero values are translated therethrough to the first input of respective summers 502-2 and 502-3 during even input-line scanline period cycles of operation.

For purposes of the following discussion, corresponding sample values of the respective input lines L1, L2, L3.... are designated $v_{L1}$, $v_{L2}, v_{L3}$......., respectively.

During the 1st scanline period cycle of operation of the filter, only each of the N samples of input line L1 is first multiplied by the c-coefficient, to provide a sample value $cv_{L1}$ and then each of these $cv_{L1}$ valued N samples is applied through summer 502-1 as an input to first N-sample delay means 504-1.

During the 2nd scanline period cycle of operation, mux 506-3 is in its non-zero state, so that the $cv_{L1}$ valued samples now emerging as an output from first N-sample delay means 504-1 are recirculated back as a second input to summer 502-1 and added to the corresponding $bv_{L2}$ samples now being applied as a first input to summer 502-1. Therefore, during the 2nd scanline period cycle of operation, the sample value of each sample applied as an input to first N-sample delay means 504-1 is $cv_{L1}+bv_{L2}$. However, during the 2nd scanline period cycle of operation, mux 506-4 is in its zero state, so that the $cv_{L1}$ valued samples are not applied to the first input of summer 502-2.

During the 3rd scanline period cycle of operation, both mux 506-3 and 506-5 are in their zero state, so that no recirculation takes place of the $cv_{L1}+bv_{L2}$ valued samples now emerging as an output from first N-sample delay means 504-1 back as a second input to summer 502-1. However, now mux 506-4 is in its non-zero state, so that these $cv_{L1}+bv_{L2}$ valued samples are forwarded through mux 506-4 to the first input of summer 502-2, and $av_{L3}$ valued samples are applied from multiplier 500-2 to the second input of summer 502-2. Thus, during the 3rd scanline period cycle of operation, $cv_{L1}+bv_{L2}+av_{L3}$ valued samples are applied as an input to second N-sample delay means 504-2.

During the 4th scanline period cycle of operation, both mux 506-3 and 506-5 are in there non-zero state, so that recirculation takes place of $cv_{L1}+bv_{L2}+av_{L3}$ valued samples now emerging as an output from second N-sample delay means 504-2 back as a third input to summer 502-2. Further, $bv_{L4}$ valued samples are now applied from multiplier 500-2 to the second input of summer 502-2. Therefore, $cv_{L1}+bv_{L2}+av_{L3}+bv_{L4}$ valued samples are now applied from the output of summer 502-2 to the input of second N-sample delay means 504-2. However, both mux 506-4 and 506-6 are now in their zero state, so that while the $cv_{L3}$ valued samples now emerging from the output of first N-sample delay means 504-1 are recirculated back to the second input of summer 502-1, these $cv_{L3}$ valued samples are not forwarded to the first input of summer 502-2, and the $cv_{L1}+bv_{L2}+av_{L3}$ valued samples now emerging as an output from second N-sample delay means 504-2 are not forwarded to the first input of summer 502-3. The recirculated $cv_{L3}$ valued samples are now added to $bv_{L4}$ valued samples in summer 502-1 and $cv_{L3}+bv_{L4}$ valued samples are applied to the input of first N-sample delay means 504-1.

During the 5th scanline period cycle of operation, both mux 506-3 and 506-5 are in their zero state, so that no recirculation takes place of the $cv_{L3}+bv_{L4}$ valued samples now emerging as an output from first N-sample delay means 504-1 back as a second input to summer 502-1. However, now mux 506-4 and 506-6 are in their non-zero state, so that these $cv_{L3}+bv_{L4}$ valued samples are forwarded through mux 506-4 to the first input of summer 502-2 and the $cv_{L1}+bv_{L2}+av_{L3}+bv_{L4}$ valued samples now emerging from second N-sample delay means 504-2 are forwarded through mux 506-4 to the first input of summer 502-3. Further, the output $cv_{L5}$ from multiplier 500-3 is applied as a second input to summer 502-3, thereby deriving filtered output line Y1, comprising

$cv_{L1}+bv_{L2}+av_{L3}+bv_{L4}+cv_{L5}$

valued samples, from the first 5-tap octave prefilter structure of the present invention, shown in Figure 5a.

It will be noted that the status of the $cv_{L3}+bv_{L4}$ valued samples during the 5th scanline period cycle of operation is identical to the status of the $cv_{L1}+bv_{L2}$ valued samples during the 3rd scanline period cycle of operation. Thus, the 6th and 7th scanline period cycles of operation will correspond, respectively, to the 4th and 5th scanline period cycles of operation. Therefore, filtered output line Y2, comprising

$cv_{L3}+bv_{L4}+av_{L5}+bv_{L6}+cv_{L7}$

valued samples, will be derived in the 7th scanline period cycle of operation. In a similar manner, filtered output line Y3, comprising

$cv_{L5}+bv_{L6}+av_{L7}+bv_{L8}$
$+cv_{L9}$ valued samples, will be derived in the 9th scanline period cycle of operation; filtered output line Y4, comprising $cv_{L7}+bv_{L8}+$
$av_{L9}+bv_{L10}+cv_{L11}$ valued samples, will be derived in the 11th scanline period cycle of operation; and so forth.

From the above discussion, it is plain that filtered output lines occur only for each successive odd scanline period cycle of operation, starting with the 5th scanline period cycle of operation. Therefore, downsampling by a factor of 2 takes place between the input and output lines of the first 5-tap octave prefilter structure of the present invention shown in Figure 5a.

Operating FIGURE 5a in its second (upsampling) mode requires only three changes from those described above with respect to its first (downsampling) mode. First, no recirculation of the respective outputs of N-sample delay means 504-1 and 504-2 is ever required in the upsampling mode. Therefore, the timing control of each of respective mux 506-3, 506-4, 506-5 and 506-6 is set at all times so as to forward the output of N-sample delay means 504-1 to the first input of summer 502-2 and forward the output of N-sample delay means 504-2 to the first input of summer 502-3 and prevent recirculation of the output of each of N-sample delay means 504-1 and 504-2. Second, in order to upsample-by-two, the respective pixel sample values of each even input line L2, L4, L6, L8.... is a duplicate of its immediately preceding input line L1, L3, L5, L7....Third, because no elimination of odd output lines takes place in upsampling, the first input line applied to multiplier 500-2 is L2 (rather than L3) and the first input line applied to multiplier 500-3 is L3 (rather than L5). However, still only odd input lines (i.e., L3, L5, L7......) are applied as an input to multiplier 500-3.

Taking into account that each even input line L2, L4..... in the upsampling mode of operation of FIGURE 5a is a duplicate of each odd input line L1, L3....., means that an odd input line designation may be substituted for its corresponding even input line designation in each of the following expressions. The result of the aforesaid changes in the operation of FIGURE 5a when operating in its upsampling mode, is that the filtered output line Y1 therefrom comprises $cv_{L1} + av_{L3} + cv_{L5}$ valued samples and the filtered output line Y2 therefrom comprises $bv_{L3} + bv_{L5}$ valued samples. Generalizing, each odd filtered output line Yi therefrom comprises $cv_{Li} + av_{L(i+2)} + cv_{L(i+4)}$ valued samples and each even filtered output line Y(i+1) therefrom comprises $bv_{L(i+2)} + bv_{L(i+4)}$ valued samples.

Because in the upsampling mode, the b kernel-function coefficients make no contribution to each odd filtered output line Yi and the c and a kernel-function coefficients make no contribution to each even filtered output line Y(i+1) the pixel sample values of both the odd and even output lines is reduced by one-half. To overcome this problem each of the kernel-function coefficients c, b, a, b, c should have twice its normal value in the case of upsampling by a factor of 2. For instance, if the normal values for the kernel-function coefficients c, b, a, b, c are 1/16, 1/4, 3/8, 1/4, 1/16, the values of these coefficients in the upsampling mode of FIGURE 5a should be 1/8, 1/2, 3/4, 1/2, 1/8.

In order to operate FIGURE 5a in its third (transparent) mode, the timing control of mux 506a-2 at all times is set so that multiplier 500-2 receives only input kernel-function coefficient a, and the timing control of each of respective mux 506-3, 506-4, 506-5 and 506-6 is set at all times so as to forward the output of N-sample delay means 504-1 to the first input of summer 502-2 and forward the output of N-sample delay means 504-2 to the first input of summer 502-3 and prevent recirculation of the output of each of N-sample delay means 504-1 and 504-2. Further, in the transparent mode, all of the input lines L1, L2, L3, L4, L5.... are applied to multiplier 500-2 (rather than only input lines L3, L4, L5...), the respective values of the kernel-function coefficients c, b, a are set to c=0, b=0 and a=1. In addition, every one of the input lines L1, L2, L3, L4, L5...... in the transparent mode is comprised of its own original pixel sample values (i.e., none of input lines L1, L2, L3, L4, L5...... is comprised of pixel sample values that are a duplicate of the pixel sample values of its immediately preceding input line). The result is that FIGURE 5a, in its transparent mode, operates merely as a single N-sample delay line that translates each input line L1, L2, L3, L4, L5.... to its corresponding output line Y1, Y2, Y3, Y4, Y5.... with a one-line delay.

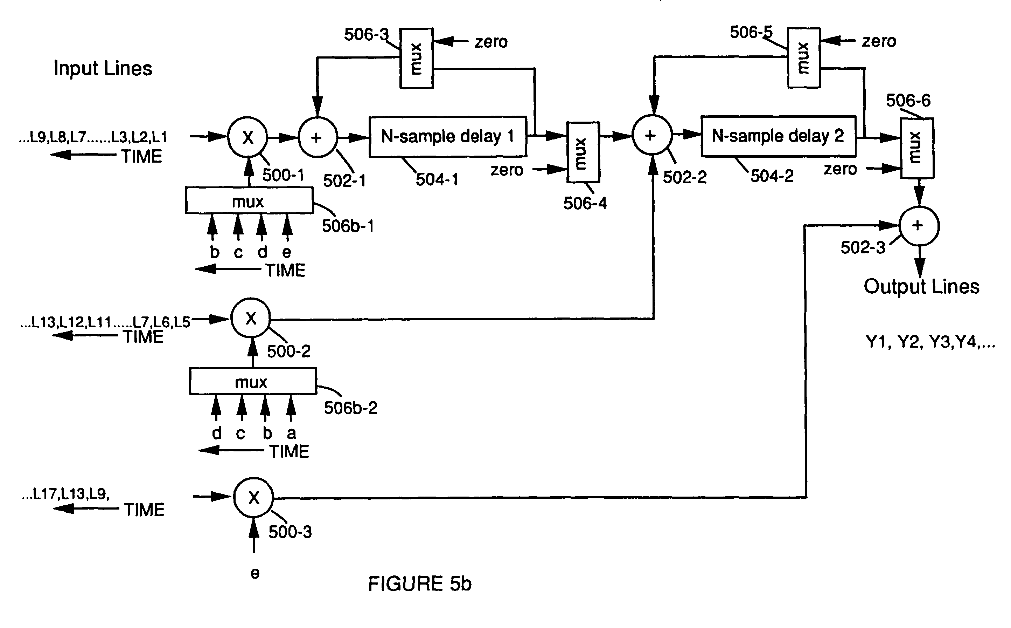

Referring now to FIGURE 5b, there is shown a second 5-tap octave prefilter structure of the present invention which is specifically shown in its first mode of operation for providing downsampling by a factor of 4. The only difference in physical structure between that of FIGURE 5b and that of above-described FIGURE 5a is that the 2-input mux 506a-1 and 506a-2 of FIGURE 5a are replaced in FIGURE 5b by 4-input mux 506b-1 and 506b-2. Mux 506b-1 operates cyclically to forward each of the 4 kernel-function coefficients e, d, c and b, in turn, to the multiplier input of multiplier 500-1. Mux 506b-2 operates cyclically to forward each of the 4 kernel-function coefficients a, b, c and d, in turn, to the multiplier input of multiplier 500-2. Further, the kernel-function coefficient e is directly applied to the input of multiplier 500-3.

Besides this difference in physical structure, there are the following differences in signal timing and control between that employed by FIGURE 5b in its downsampling mode of operation and that employed by FIGURE 5a in its downsampling mode of operation. In FIGURE 5b, starting with input line L5, every input line is applied to the multiplicand input of multiplier 500-2, and, starting with input line L9, every fourth input line (i.e., L13, L17...) is applied to the multiplicand input of multiplier 500-3. Further, the timing control of mux 506-3 and 506-5 is such that they are in their zero state only during scanline period cycles of operation 1, 5, 9, 13..... and are in their non-zero state during all other scanline period cycles of operation; while the timing control of mux 506-4 and 506-6 is such that they are in their non-zero state only during scanline period cycles of operation 1, 5, 9, 13..... and are in their zero state during all other scanline period cycles of operation.

In the operation of the FIGURE 5b structure, $ev_{L1}$ valued samples are applied to the input of first N-sample delay means 504-1 during scanline period cycle of operation 1. During each of the scanline period cycles of operation 2 to 4, successive older recirculated sample values emerging as an output from first N-sample delay means 504-1, that are applied to the second input of summer 502-1, are added to new sample values that are applied to the first input of summer 502-1 (in the manner described above in detail in connection with FIGURE 5a). This results in $ev_{L1} + dv_{L2} + cv_{L3} + bv_{L4}$ valued samples being applied to the input of first N-sample delay means 504-1 during the 4th scanline period cycle of operation. However, when these $ev_{L1} + dv_{L2} + cv_{L3} + bv_{L4}$ valued samples emerge as an output from first N-sample delay means 504-1 during the 5th scanline period cycle of operation, mux 506-3 is in its zero value state and mux 506-4 is in its non-zero value state. Therefore, these $ev_{L1} + dv_{L2} + cv_{L3} + bv_{L4}$ valued samples are forwarded to the first input of summer 502-2, where they are added to $av_{L5}$ valued samples applied to the second input of summer 502-2 before being applied as an input to second N-sample delay means 504-2.

During each of the scanline period cycles of operation 6 to 8, in which successive older recirculated sample values emerging as an output from second N-sample delay means 504-2, that are applied to the third input of summer 502-2, are added to new sample values that are applied to the second input of summer 502-2 results in $ev_{L1} + dv_{L2} + cv_{L3} + bv_{L4} + av_{L5} + bv_{L6} + cv_{L7} + dv_{L8}$ being applied to the input of second N-sample delay means 504-2 during the 8th scanline period cycle of operation. However, when these $ev_{L1}+dv_{L2}+cv_{L3}+$

$bv_{L4+}av_{L5}+bv_{L6}+cv_{L7}+dv_{L8}$

valued samples emerge as an output from first N-sample delay means 504-1 during the 9th scanline period cycle of operation, mux 506-5 is in its zero value state and mux 506-6 is in its non-zero value state. Therefore, these $ev_{L1}+dv_{L2}+cv_{L3}+$

$bv_{L4+}av_{L5}+bv_{L6}+cv_{L7}+dv_{L8}$

valued samples are forwarded to the first input of summer 502-3, where they are added to $ev_{L9}$ valued samples that are applied to the second input of summer 502-3. This results in the value of samples from the output of summer 502-3, which constitutes filtered output line Y1, being

$ev_{L1}+dv_{L2}+cv_{L3}+bv_{L4}$

$_+av_{L5}+bv_{L6}+cv_{L7}+dv_{L8}+ev_{L9}$

$4$ .

In a similar manner, the value of samples constituting filtered output line Y2 is

$ev_{L5}+dv_{L6}+cv_{L7}+bv_{L8+}av_{L9}+bv$

$_{L10}+cv_{L11}+dv_{L12}+$

$ev_{L13}$ ; the value of samples constituting filtered output line Y3 is

$ev_{L9}+dv_{L10}+cv_{L11}+bv_{L12+}av_{L13}$

$+bv_{L14}+cv_{L15}+dv_{L16}+ev_{L17}$ ; and

so forth.

From the above discussion, it is plain in the downsampling mode of FIGURE 5b that filtered output lines occur only for each successive 4th scanline period cycle of operation, starting with the 9th scanline period cycle of operation. Therefore, downsampling by a factor of 4 has taken place between the input and output lines of the second 5-tap octave prefilter structure of the present invention shown in Figure 5b.

The changes in FIGURE 5b in its upsampling mode are similar to the above-described changes in FIGURE 5a in its upsampling mode, with the exception that, in each successive group of four successive input lines L1 to L4, L5 to L8,...... in FIGURE 5b, the pixel sample values of each of the three latter input lines of that group is a duplicate of the pixel sample values of the first input line of that group. Taking this duplicate relationship into account means that the input line designation of the first input line of each group (i.e., L1, L5, L9....) may be substituted for the designations of each of the three latter input lines of that group (i.e., L2 to L4, L6 to L8, L10 to L12...) in each of the following expressions. Thus, the result of the aforesaid changes in the operation of FIGURE 5b when operating in its upsampling mode, is that the first filtered output line Yi of each of successive groups of four successive output lines (where Yi corresponds to Y1, Y5, Y9....) comprises

$ev_{Li}+av_{L(i+4)}+ev_{L(i+8)}$

valued samples; the second filtered output line Y(i+1) of each of these successive groups comprises

$bv_{L(i+4)}+dv_{L(i+8)}$ valued samples; the third filtered output line Y(i+2) of each of these successive

groups comprises $cv_{L(i+4)}+cv_{L(i+8)}$ valued samples, and the fourth filtered output line Y(i+3) of each of these successive groups comprises $dv_{L(i+4)}+bv_{L(i+8)}$ valued samples.

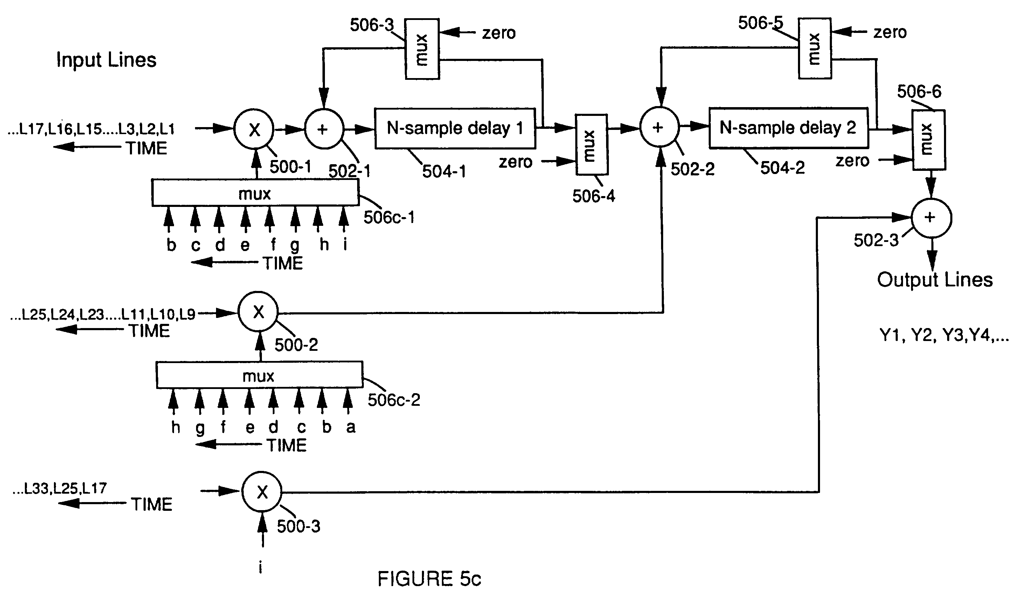

Referring now to FIGURE 5c, there is shown a third 5-tap octave prefilter structure of the present invention which is specifically shown in its first mode of operation for providing downsampling by a factor of 8. The only difference in physical structure between that of FIGURE 5c and that of above-described FIGURE 5a is that the 2-input mux 506a-1 and 506a-2 of FIGURE 5a are replaced in FIGURE 5c by 8-input mux 506c-1 and 506c-2. Mux 506c-1 operates cyclically to forward each of the 8 kernel-function coefficients i, h, g, f, e, d, c and b, in turn, to the multiplier input of multiplier 500-1. Mux 506c-2 operates cyclically to forward each of the 8 kernel-function coefficients a, b, c, d, e, f, g and h, in turn, to the multiplier input of multiplier 500-2. Further, the kernel-function coefficient i is directly applied to the input of multiplier 500-3.

The differences in signal timing and control between that employed by FIGURE 5c and that employed by FIGURE 5a are somewhat similar to the differences in signal timing and control, described above, between that employed by FIGURE 5b and that employed by FIGURE 5a. In the case of FIGURE 5c, starting with input line L9, every input line is applied to the multiplicand input of multiplier 500-2, and, starting with input line L17, every eighth input line (i.e., L25, L33...) is applied to the multiplicand input of multiplier 500-3. Further, the timing control of mux 506-3 and 506-5 is such that they are in their zero state only during scanline period cycles of operation 1, 9, 17..... and are in their non-zero state during all other scanline period cycles of operation; while the timing control of mux 506-4 and 506-6 is such that they are in their non-zero state only during scanline period cycles of operation 1, 9, 17..... and are in their zero state during all other scanline period cycles of operation.

Employing the same operational approach described above in detail in connection with FIGURES 5a and 5b, the, FIGURE 5c sample values of the filtered output line Y1 is

$iv_{L1}+hv_{L2}+gv_{L3}+fv_{L4+}ev_{L5}+$

$dv_{L6}+cv_{L7}+bv_{L8}+av_{L9}+bv_{L10}+c$

$v_{L11}+dv_{L12+}ev_{L13}+fv_{L14}+gv_{L15}$

$+hv_{L16}$

$+iv_{L17}$ . The sample values of the filtered output line Y2 is $iv_{L9}+hv_{L10}$

$+gv_{L11}+fv_{L12+}ev_{L13}+dv_{L14}+cv_{L}$

$_{15}+bv_{L16}+av_{L7}+bv_{L18}+cv_{L19}+dv$

$_{L20+}$

$ev_{L21}+fv_{L22}+gv_{L23}+hv_{L24}+iv_{L2}$

$_5$ . The sample values of the filtered output line Y3 is

$iv_{L9}+hv_{L10}+gv_{L11}+fv_{L12+}ev_{L13}$

$+dv_{L14}+cv_{L15}+bv_{L16}+$

$av_{L7}+bv_{L18}+cv_{L19}+dv_{L20+}ev_{L21}$

$+fv_{L22}+gv_{L23}+hv_{L24}+iv_{L25}$ .

From the above discussion, it is plain that filtered output lines occur only for each successive 8th scanline period cycle of operation, starting with the 17th scanline period cycle of operation. Therefore, downsampling by a factor of 8 has taken place between the input and output lines of the third 5-tap octave prefilter structure of the present invention shown in Figure 5c.

The changes in FIGURE 5c in its upsampling mode are similar to the above-described changes in FIGURE 5a in its upsampling mode, with the exception that, in each successive group of eight successive input lines L1 to L8, L9 to L16,...... in FIGURE 5c, the pixel sample values of each of the seven latter input lines of that group is a duplicate of the pixel sample values of the first input line of that group. Taking this duplicate relationship into account means that the input line designation of the first input line of each group (i.e., L1, L9, L17....) may be substituted for the designations of each of the seven latter input lines of that group (i.e., L2 to L8, L10 to L16, L18 to L24...) in each of the following expressions. Thus, the result of the aforesaid changes in the operation of FIGURE 5c when operating in its upsampling mode, is that the first filtered output line Yi of each of successive groups of eight successive output lines (where Yi corresponds to Y1, Y9, Y17....) comprises

$iv_{Li}+av_{(i+8)}+iv_{L((i+16)}$ valued

samples; the second filtered output line Y(i+1) of each of these successive groups comprises

$bv_{L(i+8)}+hv_{L(i+16)}$ valued samples; the third filtered output line $Y_{(i+2)}$ of each of these successive groups comprises $cv_{L(i+8)}+gv_{L(i+16)}$ valued samples; the fourth filtered output line $Y_{(i+3)}$ of each of these successive groups comprises $dv_{L(i+8)}+fv_{L(i+16)}$ valued samples; the fifth filtered output line Y(i+4) of each of these successive groups comprises $ev_{L(i+8)}+ev_{L(i+16)}$ valued samples; the sixth filtered output line Y(i+5) of each of these successive groups comprises $fv_{L(i+8)}+dv_{L(i+16)}$ valued samples; the seventh filtered output line Y(i+6) of each of these successive groups comprises $gv_{L(i+8)}+cv_{L(i+16)}$ valued samples, and the eighth filtered output line Y(i+7) of each of these successive groups comprises $hv_{L(i+8)}+bv_{L(i+16)}$ valued samples.

By means of suitable timing and control, the physical structure shown in Figure 5c may be used to selectively provide downsampling or upsampling by a factor of 2 or factor of 4, in addition to providing downsampling or upsampling by a factor of 8. Downsampling or upsampling by a factor of 2 is accomplished by applying four sets of kernel-function coefficients c,b to 8-tap mux 506c-1, four sets of kernel-function coefficients a,b to 8-tap mux 506c-2, and kernel-function coefficient c as a multiplier to multiplier 500-3; and both applying input lines as a multiplicand to multipliers 500-2 and 500-3 and switching mux 506-3, 506-4, 506-5 and 506-6 between their zero value state and non-zero value states in accordance with the timing employed for downsampling or upsampling in FIGURE 5a. Downsampling or upsampling by a factor of 4 is accomplished by applying two sets of kernel-function coefficients e,d,c,b to 8-tap mux 506c-1, two sets of kernel-function coefficients a,b,c,d to 8-tap mux 506c-2, and kernel-function coefficient e to multiplier 500-3; and both applying input lines as a multiplicand to multipliers 500-2 and 500-3 and switching mux 506-3, 506-4, 506-5 and 506-6 between their zero value state and non-zero value states in accordance with the timing employed for downsampling or upsampling in FIGURE 5b.

Generalizing, the 5-tap octave prefilter structure of the present invention is able to provide for downsampling or upsampling of scan lines by a factor of $2^n$ by (1) employing $2^n$-tap mux 506-1 and 506-2, with mux 506-1 applying, in turn, each of the first $2^n$ coefficients of a $2^{n+1}+1$ coefficient kernel function to the multiplier input of multiplier 500-1, mux 506-2 applying, in turn, each of the second $2^n$ coefficients of the $2^{n+1}+1$ coefficient kernel function to the multiplier input of multiplier 500-2, and directly applying the last coefficient of the $2^{n+1}+1$ coefficient kernel function to the multiplier input of multiplier 500-3; (2) applying every input line as a multiplicand input to multiplier 500-1; starting with input line $L2^n+1$ for downsampling or L2 for upsampling, applying every input line as a multiplicand input to multiplier 500-2; and, starting with input line $L2^{n+1}+1$ for downsampling or L3 for upsampling, applying every $2^n$th input line as a multiplicand input to multiplier 500-3; and (3), for downsampling, maintaining mux 506-3 and 506-5 in their zero state, at most, only during all of scanline period cycles of operation 1, $2^n+1$, $2^{n+1}+1$, $2^{n+2}+1$, $2^{n+3}+1$...... and maintaining mux 506-3 and 506-5 in their non-zero state during all other scanline period cycles of operation, while mux 506-4 and 506-6 are maintained in their non-zero state, at most, only during all of scanline period cycles of operation 1, $2^n+1$, $2^{n+1}+1$, $2^{n+2}+1$, $2^{n+3}+1$...... and mux 506-4 and 506-6 are maintained in their zero state during all other scanline period cycles of operation, while, for upsampling, maintaining mux 506-3 and 506-5 in their zero state during all scanline period cycles of operation and maintaining mux 506-4 and 506-6 in their non-zero state during all scanline period cycles of operation.

The approach of the present invention is not limited in their application to the 5-tap filter structures shown in FIGURES 5a, 5b and 5c for illustrative purposes. In general, a filter structure having an odd number of taps T requires a $2^n(T-1)/2+1$ -coefficient kernel function (so that a 5-tap filter structure requires a $2^{n+1}+1$ coefficient kernel function), while a filter structure having an even number of taps T requires a $2^nT/2$-coefficient kernel function. In accordance with the approach of the present invention, which may be applied to filter structures having any number of odd or even taps, the number of N-sample delay means required is equal to the integer portion of T/2, where T is the number of filter taps. Thus, while either a 5-tap or a 4-tap filter requires two N-sample delay means, either a 3-tap or a 2-tap filter requires only one N-sample delay means and either a 7-tap or a 6-tap filter requires three N-sample delay means. Associated with the input of each N-sample delay means is a kernel-function coefficient mux (e.g., mux 506a-1 and 506a-2 of FIGURE 5a), a multiplier (e.g., multipliers 500-1 and 500-2 of FIGURE 5a), and a summer (e.g., summers 502-1 and 502-2 of FIGURE 5a). If the filter is an odd-tap filter, an additional multiplier (e.g., multiplier 502-3 of FIGURE 5a) and summer (e.g., summer 502-3 of FIGURE 5a) are required to add the last kernel-function coefficient (e.g., coefficient c of FIGURE 5a) weighted sample values to the kernel-function weighted sample values emerging from the last N-sample delay means (e.g., N-sample delay means 504-2 of FIGURE 5a). If the filter is an even-tap filter, no such additional multiplier and summer are required. Associated with the output of each N-sample delay means is (1) a first zero-value inserting mux (e.g., mux 506-3 and 506-5 of FIGURE 5a) for controlling recirculation of this output back to the input of that N-sample delay means and (2) a second zero-value inserting mux (e.g., mux 506-4 and 506-6 of FIGURE 5a) for controlling the forwarding of this output.

It has been assumed for illustrative purposes that the N samples of each N-sample delay means of the filter are all the pixel samples of a scanline of a video image that is being resized by the resampler of FIGURE 3, so that each N-sample delay means provides a delay of one scanline period, thereby providing filtering in the vertical (Y) direction of the video image. However, by making N=1, so that each N-sample delay means provides a delay of only one pixel period, the filter will provide filtering in the horizontal (X) direction of the video image.

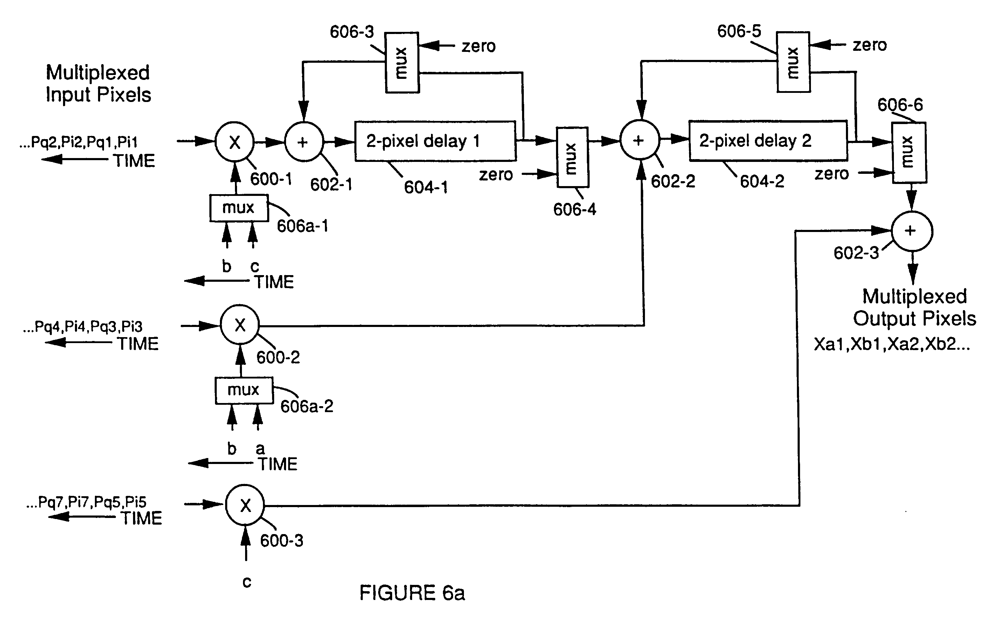

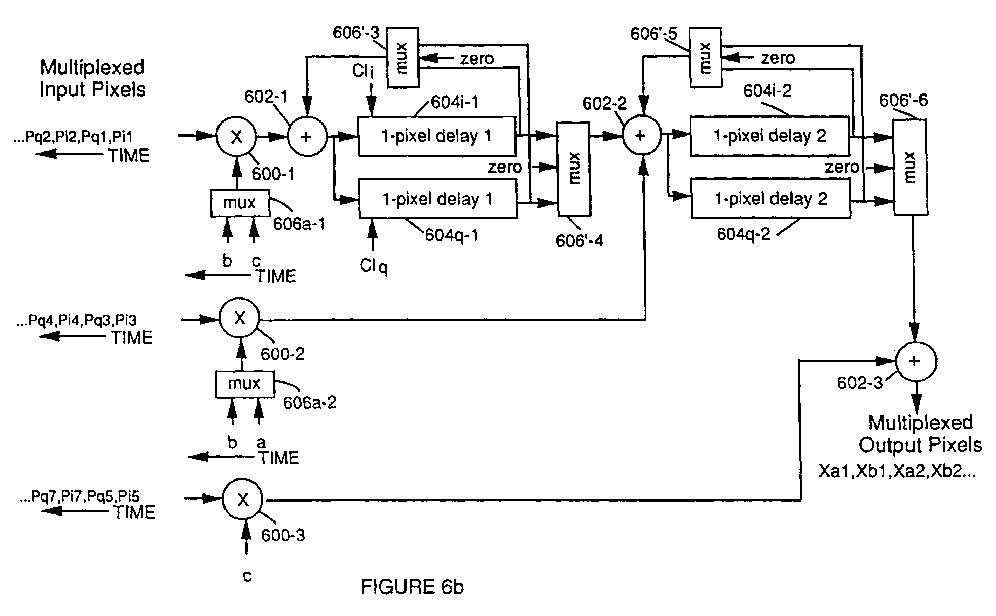

In the realization of the present invention employing pipeline architecture on a VLSI chip, it is desirable that a single clock frequency be used throughout and that this single clock frequency be able to meet the Nyquist criterion in the sampling of the highest frequency of the widest bandwidth component of an input signal. It is known that an NTSC video signal occurring in real time comprises a luminance component having a bandwidth of about 4 MHz and separate I and Q chrominance components each having a bandwidth of about 2 MHz. Therefore, in order to efficiently implement the present invention on a VLSI chip, it is desirable to employ time multiplex techniques in providing filtering in the horizontal (X) direction of the video image for the pixels of the I and Q chrominance components. Each of FIGURES 6a and 6b shows a different modification of FIGURE 5a for accomplishing this.

In FIGURE 6a, respective elements 600-1, 600-2, 600-3, 602-1, 602-2, 602-3, 604-1, 604-2, 606a-1, 606a-2, 606-3, 606-4, 606-5 and 606-6 correspond to respective elements 500-1, 500-2, 500-3, 502-1, 502-2, 502-3, 504-1, 504-2, 506a-1, 506a-2, 506-3, 506-4, 506-5 and 506-6 of FIGURE 5a. However, each of elements 604-1, 604-2 provides a delay of only 2 pixels, rather than the N pixels of an entire line provided by each of elements 504-1, 504-2.

As indicated in FIGURE 6a, multiplier 600-1 receives, in turn, as a time-multiplexed multiplicand each of all the successive input I pixel sample values Pi1, Pi2.... interleaved with each of all the successive input Q pixel sample values Pq1, Pq2.... Thus, the respective input I pixel samples and the respective input Q pixel samples occur on alternate clocks of the aforesaid single clock frequency, so that a sample period of each of the I pixels and a sample period of each of the Q pixels is twice that of a clock period. In a similar manner, multiplier 600-2 receives, in turn, as a time-multiplexed multiplicand each of all the successive input I pixel sample values Pi3, Pi4.... interleaved with each of all the successive input Q pixel sample values Pq3, Pq4.... and multiplier 600-3 receives, in turn, as a time-multiplexed multiplicand each of all the successive input I pixel sample values Pi5, Pi7.... interleaved with each of all the successive input Q pixel sample values Pq5, Pq7....

Because of the time-multiplexed operation of FIGURE 6a, each of multiplexers 606a-1, 606a-2, 606-3, 606-4, 606-5 and 606-6 is switched back and forth at one-half the rate at which each of corresponding multiplexers 506a-1, 506a-2, 506-3, 506-4, 506-5 and 506-6 is switched back and forth. Further, the fact that each of first and second delays 604-1 and 604-2 provides a 2-pixel delay ensures that delayed I chrominance pixels are added by summers 602-1, 602-2 and 602-3 only to other I chrominance pixels applied as inputs thereto, and that delayed Q chrominance pixels are added by summers 602-1, 602-2 and 602-3 only to other Q chrominance pixels applied as inputs thereto.

The timing circuitry associated with a VLSI chip for implementing the present invention may include means for deriving a pair of phase-displaced half-frequency clocks from the aforementioned single clock (as shown in FIGURE 6c described below). The availability of such phase-displaced half-frequency clocks permits the present invention to be time-multiplexed implemented in the type of manner shown in below-described FIGURE 6b. In fact, a type FIGURE 6b implementation is incorporated in a VLSI chip that has actually been fabricated.

The implementation of FIGURE 6b only differs from the implementation of FIGURE 6a in that (1) the output from summer 602-1 is applied in parallel to each of first 1-pixel delays 604i-1 and 604q-1, rather than being applied to first 2-pixel delay 604-1; (2) the output from summer 602-2 is applied in parallel to each of second 1-pixel delays 604i-2 and 604q-2, rather than being applied to second 2-pixel delay 604-2; and (3) 3-input multiplexers 606'-3, 606'-4, 606'-5 and 606'-6, respectively, replace 2-input multiplexers 606-3, 606-4, 606-5 and 606-6.

As indicated in FIGURE 6b, the timing of each of first 1-pixel delay 604i-1 and second 1-pixel delay 604i-2 is controlled by an I chrominance clock ($Cl_i$) and the timing of each of first 1-pixel delay 604q-1 and second 1-pixel delay 604q-2 is controlled by a Q chrominance clock (Clq). The relationship of each of $Cl_i$ and Clq with respect to the single system clock Cl and to one another is shown by timing diagrams 608, 610 and 612 in FIGURE 6c. Specifically, timing diagram 608 shows that the Cl clocks occur periodically at a given frequency; timing diagram 610 shows that the $Cl_i$ clocks occur at a frequency equal to one-half the Cl clock frequency with each $Cl_i$ clock being isochronous with the odd Cl clocks, and timing diagram 612 shows that the $Cl_q$ clocks occur at a frequency equal to one-half the Cl clock frequency with each $Cl_q$ clock being isochronous with the even Cl clocks. Thus, each $Cl_q$ clock is phase shifted with respect to each $Cl_i$ clock by one Cl clock period.

The timing control of the 3-input multiplexers at the Cl clock rate ensures that delayed I chrominance pixels are added by summers 602-1, 602-2 and 602-3 only to other I chrominance pixels applied as inputs thereto, and that delayed Q chrominance pixels are added by summers 602-1, 602-2 and 602-3 only to other Q chrominance pixels applied as inputs thereto.

For illustrative purpose, both the implementations of FIGURES 6a and 6b described above relate to time-divisiion multiplex modification of the first implementation of the five-tap octave digital filter shown in FIGURE 5a, which is capable of providing downsampling or upsampling by a factor of 2 in both the horizontal dimension and the vertical dimension. It is plain that the principles illustrated in FIGURES 6a and 6b may be extended to implementations of other octave digital filters, discussed above, having fewer or more than five taps and/or which provide downsampling or upsampling by any factor having a value $2^n$.

The implementation of FIGURE 6b, besides being employed for time-multiplex processing the I and Q chrominance components, is also useful in time-multiplexing processing two half-resolution data streams (such as two half-resolution luminance signals).

The resampler of FIGURE 3 or 3a is not limited in its use to the resizing of a video image. For instance, among other uses would be the conversion of motion-picture frames, (which occur at 24 frames/second) to NTSC video frames (which occur at 30 frames/second) or vice versa; and the conversion of NTSC-standard video frames (which occur at 60 interlaced fields/second) to European-standard video frames, (which 50 interlaced fields/second) or vice versa.

Further, while the octave prefilter with $2^n$ downsampling and upsampling capabilities of the present invention (of the type shown in FIGURES 5a, 5b and 5c) is particularly suitable for use in implementing the resampler of FIGURE 3 or 3a, its use is not limited thereto.

## Claims

1. A digital resampler for resizing a video image by altering the sampling period of an input stream of digital-signal sample values that define D dimensional information, where D is at least one; wherein those digital-signal sample values of said input stream that define a given dimension of said information occur at a given sampling period P; and wherein said apparatus alters said given sampling period P by a factor equal to M/L, where L is a first positive integer greater in value than one and M is a second positive integer; characterized by:

   first means (300, 300', 304, 304') including interpolation filter means (302, 302'), responsive to said digital-signal sample values of said input sample stream for producing a first derived sample stream of digital-signal sample values in which said given sampling period P of said input stream is multiplied directly by a factor equal to M'/CL, where C is a given positive integer, and M' is smaller than CL, either $2^n(M'/CL)$ or $2^{-n}M'/CL)$ is equal to M/L and the absolute value of n is an integer of any whole number including zero, so that the sampling period of said first derived sample stream is (M'/CL)P; and
   second means, including octave prefiltering and sample means (306, 306', 308, 308'), responsive to said first derived sample stream of digital-signal sample values for producing as an output a second derived sample stream of digital-signal sample values in which said first derived sampling period (M'/CL)P of said first derived sample stream is multiplied by a factor equal to either $2^n$ or $2^{-n}$ so that the sampling period of said second derived sample stream is (M/L)P.

2. The apparatus defined in Claim 1, wherein:

   said M is a second positive integer that is smaller in value than the value of said first positive integer L; and the value of said given positive integer C is one; whereby $2^{-n}(M'/L)=M/L$ .

3. The apparatus defined in Claim 2, wherein:

   the value of n is equal to zero;

whereby no multiplication takes place and $M'/L=M/L$.

4.   The apparatus defined in Claim 1, wherein:

said M is a second positive integer that may be either smaller in value or larger in value than the value of said first positive integer L; the value of said given positive integer C is two; and the absolute value of n is at least equal to one; whereby $2^n(M'/2L)=M/L$ when M<L and $2^{-n}(M'/2L)=M/L$ when M>L.

5.   The apparatus defined in Claim 1, wherein:

said interpolation filter means includes third means which, during each of successive sample intervals equal in length to (M')P given sampling periods of said input stream, is responsive to each of a series of M'+1 samples that occur at said given sampling period P, wherein the respective sample-values of that series of M'+1 samples are $v_1$, $v_2$, $v_3$.....$v_{M'-1}$, $v_{M'}$ and $v_{M'+1}$; and said third means inserts CL-1 interpolated samples, occurring at an interpolated sample period equal to (M'/CL)P, between the first sample and the (M'+1)th sample of that series, with each of said interpolated samples having an interpolated sample value which is a particular function of the respective sample values $v_1$, $v_2$, $v_3$.....$v_{M'-1}$, $v_{M'}$ and $v_{M'+1}$ that depends on the ordinal position of that interpolated sample.

6.   The apparatus defined in Claim 5, wherein:

the interpolated sample value of each of said CL-1 interpolated samples inserted by said third means is substantially a linear interpolation between that particular sample value $v_1$, $v_2$, $v_3$,....$v_{M'-1}$ or $v_{M'}$ of that ordinal sample of said series which immediately precedes that interpolated sample and that particular sample value $V_2$, $V_3$,.... $V_{M'-1}$ or $V_{M'+1}$ of that ordinal sample of said series which immediately follows that interpolated sample.

7.   The apparatus defined in Claim 1, wherein said second means includes a T-tap digital filter having a symmetrical low-pass filtering characteristic at baseband frequencies defined by the respective values of each of T kernel-function weighting coefficients, where T may be either an odd or even given plural integer having a value of at least three and/or the value of n is at least equal to two; and wherein said T-tap digital filter comprises;

a total number of N-sample delay means equal in number to only the integer portion of T/2, N being a given number of at least one, whereby said filter comprises a single N-sample delay means when said given plural integer has a value of two or three and comprises a plurality of N-sample delay means when said given plural integer has a value larger than three, and said plurality of N-sample delay means are serially connectable, in order, when said given plural integer has a value larger than three.

8.   The apparatus defined in Claim 1 or 7, wherein:

said sample values of said input stream comprise pixel-period sample values in the horizontal (X) dimension and scanline-period sample values in the vertical (Y) dimension of 2-dimensional (X,Y) video-image information, and said given dimension of said video-image information is said vertical (Y) dimension thereof, whereby said given sampling period P is said scanline period and a series of N successive pixel sample values occur during each scanline-period P.

9.   The apparatus defined in claim 7, wherein said T-tap digital filter further comprises:

first filter means including a summer associated with the input of each of said total number of N-sample delay means for applying a stream of kernel-function coefficient-weighted sample values to the input of that N-sample delay means with which it is associated; second filter means associated with the output of each of said total number of N-sample delay means, said second filter means being responsive to first timing-control signals applied thereto during each of successive cycles of operation of said filter for selectively, during that cycle, either recirculating the stream of kernel-function coefficient-weighted sample values emerging from the output of that N-sample delay means with which it is associated back as an input to the summer of the first filter means associated therewith or, alternatively, forwarding the stream of kernel-function coefficient-weighted sample values emerging from the output of that N-sample delay means with which it is associated, thereby applying the output of each of the ordinal N-sample delay means preceding the last ordinal one as an input to the summer of the first filter means associated with its immediately following H-sample delay means and applying the output of the last ordinal N-sample delay means as said output stream of said filter; and

third filter means responsive to second timing-control signals applied thereto during each of said successive cycles of operation of said filter for selectively, during selected cycles, controlling the application of each of individual streams of kernel-function coefficient-weighted sample values, corresponding to certain sample values of said first derived sample stream, as an input solely to the summer of that certain one of said first filter input means that corresponds thereto;

whereby the value of n, and hence the amount of multiplication provided by said filter, may be varied without structural change solely by controlling the sequence of respective first and second timing-control signals applied thereto during said successive cycles of operation of said filter.

10. The apparatus defined in claim 9, where T is an odd given plural integer, and wherein:

said second filter means associated with the output of the last ordinal one of the N-sample delay means includes a summer having the output of the last ordinal N-sample delay means being applied as an input thereto and the output thereof constituting said output stream of said filter; and

said third filter means is responsive to second timing-control signals applied thereto during each of said successive cycles of operation of said filter for selectively, during selected cycles, controlling the application of an additional input stream of kernel-function coefficient-weighted sample values, corresponding to certain sample values of said first derived sample stream, as an input to the summer of said second filter means associated with the output of the last ordinal one of the N-sample delay means.

**Patentansprüche**

1. Digitale Wiederabtastvorrichtung zur Aufarbeitung eines Videobildes durch Veränderung der Abtastperiode eines eingegebenen Stroms von Digitalsignal-Abtastwerten, die D-dimensionale Information definieren, wobei D mindestens eins ist; bei welcher diejenigen Digitalsignal-Abtastwerte des eingegebenen Stroms, die eine gegebene Dimension der Information definieren, bei einer gegebenen Abtastperiode P auftreten; und bei welcher die Vorrichtung die gegebene Abtastperiode P um einen Faktor gleich M/L verändert, wobei L eine erste positive Ganze Zahl mit einem Wert größer als eins ist, und M eine zweite positive Ganze Zahl ist; gekennzeichnet durch:

auf die Digitalsignal-Abtastwerte des eingegebenen Abtastwertestroms ansprechende erste Einrichtungen (300, 300', 304, 304'), die eine Interpolationsfiltereinrichtung (302, 302') einschließen, zur Erzeugung eines ersten abgeleiteten Abtastwertestrom von Digitalsignal-Abtastwerten, in denen die gegebene Abtastperiode P des eingegebenen Stroms direkt mit einem Faktor gleich M'/CL multipliziert wird, wobei C eine gegebene positive Ganze Zahl ist, und M' kleiner als CL ist, entweder $2^n(M'/CL)$ oder $2^{-n}(M'/CL)$ gleich M/L ist, und der Absolutwert von n eine Ganze Zahl mit einer beliebigen ganzen Benummerung einschließlich Null ist, so dass die Abtastperiode des ersten abgeleiteten Abtastwertestroms (M'/CL)P ist; und

auf den ersten abgeleiteten Abtastwertestrom von Digitalsignal-Abtastwerten ansprechende zweite Einrichtungen, die eine Oktavvorfilterung und Abtasteinrichtungen (306, 306', 308, 308') einschließen, zum Erzeugen eines zweiten abgeleiteten Abtastwertestroms von Digitalsignal-Abtastwerten als Ausgangsgröße, in denen die erste abgeleitete Abtastperiode (M'/CL)P des ersten abgeleiteten Abtastwertestroms mit einem Faktor gleich entweder $2^n$ oder $2^{-n}$ multipliziert wird, so dass die Abtastperiode des zweiten abgeleiteten Abtastwertestroms (M/L)P ist.

2. Vorrichtung nach Anspruch 1, bei welcher

M eine zweite positive Ganze Zahl ist, deren Wert kleiner ist als der Wert der ersten positiven Ganzen Zahl L; und der Wert der gegebenen positiven Ganzen Zahl C eins ist; wodurch $2^{-n}(M'/L) = M/L$.

3. Vorrichtung nach Anspruch 2, bei welcher:

der Wert von n gleich null ist; wodurch keine Multiplikation stattfindet und M'/L = M/L.

4. Vorrichtung nach Anspruch 1, bei welcher:

M eine zweite positive Ganze Zahl ist, die entweder einen kleineren Wert oder einen größeren Wert besitzen kann als den Wert der ersten positiven Ganzen Zahl L; der Wert der gegebenen positiven Ganzen Zahl C zwei ist; und der Absolutwert von n mindestens gleich eins

ist;
wodurch

$$2^n(M'/2L) = M/L \text{ , wenn } M < L \text{ und}$$
$$2^{-n}(M'/2L) = M/L \text{ , wenn } M > L.$$

5.  Vorrichtung nach Anspruch 1, bei welcher:

die Interpolationsfiltereinrichtung eine dritte Einrichtung einschließt, die während jedem von aufeinanderfolgenden Abtastwertintervallen, deren Länge gleich (M')P gegebenen Abtastperioden des eingegebenen Stroms ist, auf jeden von einer Reihe von M'+1 Abtastwerten anspricht, die bei der gegebenen Abtastperiode P auftreten, wobei die jeweiligen Abtastwerte dieser Reihe von M'+1 Abtastwerten $v_1$, $v_2$, $v_3$ ..... $v_{M'-1}$, $v_{M'}$ und $v_{M'+1}$ sind; und die dritte Einrichtung CL-1 interpolierte Abtastwerte, die bei einer interpolierten Abtastperiode gleich (M'/CL)P auftreten, zwischen den ersten Abtastwert und den (M'+1)ten Abtastwert dieser Reihe einfügt, wobei jeder der interpolierten Abtastwerte einen interpolierten Abtastwert aufweist, der eine bestimmte Funktion der jeweiligen Abtastwerte $v_1$, $v_2$, $v_3$ ..... $v_{M'-1}$, $v_{M'}$ und $v_{M'+1}$ ist, welche von der Ordinalzahlposition dieses interpolierten Abtastwertes abhängt.

6.  Vorrichtung nach Anspruch 5, bei welcher:

der interpolierte Abtastwert von jedem der von der dritten Einrichtung eingefügten CL-1 interpolierten Abtastwerte im Wesentlichen eine lineare Interpolation zwischen diesem bestimmten Abtastwert $v_1$, $v_1$, $v_2$, $v_3$ ... $v_{M'-1}$ oder $v_{M'}$ dieses Ordinalzahl-Abtastwertes der besagten Reihe ist, welcher diesem interpolierten Abtastwert unmittelbar vorangeht, sowie diesem bestimmten Abtastwert $v_2$, $v_3$,... $v_{M'-1}$ oder $V_{M'}$ dieses Ordinalzahlabtastwertes der besagten Reihe, welcher diesem interpolierten Abtastwert unmittelbar folgt.

7.  Vorrichtung nach Anspruch 1, bei welcher die zweite Einrichtung ein T-Abgriff-Digitalfilter einschließt, das eine symmetrische Tiefpassfiltereigenschaft bei Basisbandfrequenzen aufweist, die durch die jeweiligen Werte von jedem von T Kernfunktions-Gewichtungskoeffizienten definiert werden, wobei T entweder eine ungerade oder gerade gegebene Ganze Mehrzahl mit einem Wert von mindestens drei ist, und/oder der Wert von n mindestens gleich zwei ist; und bei welcher der besagte T-Abgriff-Digitalfilter umfasst:

eine Gesamtzahl von N-Abtastwertverzögerungseinrichtungen, deren Anzahl gleich ist mit nur dem ganzzahligen Teil von C/2, wobei N eine gegebene Zahl von mindestens eins ist, wodurch der Filter eine einzige N-Abtastwertverzögerungseinrichtung umfasst, wenn die gegebene Ganze Mehrzahl einen Wert von zwei oder drei besitzt, und eine Mehrzahl von N-Abtastwertverzögerungseinrichtungen umfasst, wenn die gegebene Ganze Mehrzahl einen Wert größer als drei besitzt, und die Mehrzahl von N-Abtastwertverzögerungseinrichtungen geordnet in Reihe verbindbar sind, wenn die gegebene Ganze Mehrzahl einen Wert von größer drei besitzt.

8.  Vorrichtung nach Anspruch 1 oder 7, bei welcher:

die Abtastwerte des eingegebenen Stroms Pixelperioden-Abtastwerte in der horizontalen (X) Dimension und Abtastzeilenperioden-Abtastwerte in der vertikalen (Y) Dimension von zweidimensionaler (X, Y) Videobildinformation umfassen, und die gegebene Dimension der Videobildinformation ihre vertikale (Y) Dimension ist, wodurch die gegebene Abtastperiode P die Abtastzeilenperiode ist, und eine Reihe von N aufeinanderfolgenden Pixel-Abtastwerten während jeder Abtastzeilenperiode P auftreten.

9.  Vorrichtung nach Anspruch 7, bei welcher der T-Abgriff-Digitalfilter weiter umfasst:

eine erste Filtereinrichtung, die ein Summierglied einschließt, das mit dem Eingang von jeder der Gesamtzahl von N-Abtastwertverzögerungseinrichtungen verbunden ist, um einen Strom von kernfunktionskoeffizientengewichteten Abtastwerten zu dem Eingang dieser N-Abtastwertverzögerungseinrichtung, mit der es verbunden ist, zuzuführen; eine zweite Filtereinrichtung, die mit dem Ausgang von jeder der Gesamtzahl von N-Abtastwertverzögerungseinrichtungen verbunden ist, wobei die zweite Filtereinrichtung auf erste Taktsteuerungssignale anspricht, die ihr während jedem von aufeinanderfolgenden Betriebszyklen des Filters zugeführt werden, um während dieses Zyklus wahlweise entweder den Strom von kernfunktionskoeffizientengewichteten Abtastwerten, die aus dem Ausgang dieser N-Abtastwertverzögerungseinrichtung, mit der sie verbunden ist, als Eingangsgröße zum Summierglied der damit verbundenen ersten Filtereinrichtung zurückzuführen, oder alternativ den Strom von kernfunktionskoeffizientengewichteten Abtastwerten, die aus dem Ausgang dieser N-Abtastwertverzögerungseinrichtung austreten, mit der sie verbunden ist, weiterzuleiten, um dadurch die Ausgangsgröße von jeder der N-Abtastwertverzögerungseinrichtung mit einer Ordinalzahl, die derjenigen mit der letzten Ordinalzahl vorangeht, als Eingangsgröße zum Summierglied der ersten Filtereinrichtung zuzuführen, die mit ihrer unmittelbar nachfolgenden N-Abtastwertverzögerungseinrichtung verbunden ist, und um die Ausgangsgröße der N-Abtastverzögerungseinrichtung mit der letzten Ordinalzahl als Ausgangsstrom des Filters zuzuführen; und

eine dritte Filtereinrichtung, die auf zweite Taktsteuerungssignale anspricht, die ihr während jedem der aufeinanderfolgenden Betriebszyklen des Filters zugeführt werden, um während ausgewählter Zyklen wahlweise die Zufuhr von jedem von einzelnen Strömen von kernfunktionskoeffizientengewichteten Abtastwerten, entsprechend gewissen Abtastwerten des ersten abgeleiteten Abtastwertestroms, als Eingangsgröße allein zum Summierglied von dieser gewissen der ersten Filtereingabeeinrichtungen, die ihr entsprechen, zu steuern; wodurch der Wert von n und somit das Maß der von dem Filter gelieferten Multiplikation ohne eine strukturelle Veränderung allein durch Steuerung der Folge von jeweiligen ersten und zweiten Taktsteuerungssignalen verändert werden kann, die während der aufeinanderfolgenden Betriebszyklen des Filters zu ihm zugeführt werden.

**10.** Vorrichtung nach Anspruch 9, wobei T eine ungerade gegebene Ganze Mehrzahl ist, und bei welcher:

die zweite Filtereinrichtung, die mit dem Ausgang der N-Abtastwertverzögerungseinrichtung mit der letzten Ordinalzahl der N-Abtastwertverzögerungseinrichtungen verbunden ist, ein Summierglied einschließt, zu dem die Ausgangsgröße der N-Abtastwertverzögerungseinrichtung mit der letzten Ordinalzahl als Eingangsgröße zugeführt wird, und deren Ausgangsgröße den Ausgangsstrom des Filters bildet; und

die dritte Filtereinrichtung auf zweite Taktsteuerungssignale anspricht, die während jedem der aufeinanderfolgenden Betriebszyklen des Filters zu ihr zugeführt werden, um während ausgewählter Zyklen wahlweise die Zufuhr eines zusätzlichen eingegebenen Stroms von kernfunktionskoeffizientengewichteten Abtastwerten, entsprechend gewissen Abtastwerten des ersten abgeleiteten Abtastwertestroms, als Eingangsgröße zum Summierglied der zweiten Filtereinrichtung, die mit dem Ausgang der N-Abtastwertverzögerungseinrichtung mit der letzten Ordinalzahl der N-Abtastwerteverzögerungseinrichtungen verbunden ist, zu steuern.

## Revendications

**1.** Un appareil numérique de rééchantillonnage pour reformater une image vidéo en modifiant la période d'échantillonnage d'un flux d'entrée de valeurs d'échantillons de signal numérique qui définissent l'information dimensionnelle D, où D est au moins un dans lequel ces valeurs d'échantillons de signal numérique qui définissent une dimension donnée de ladite information apparaissent à une période d'échantillonnage donnée P ; et dans lequel ledit appareil modifie ladite période d'échantillonnage donnée P d'un facteur égal à M/L, où L est un premier entier positif supérieur en valeur à un et M est un deuxième entier positif ; caractérisé par

des premiers moyens (300, 300', 304, 304') comprenant des moyens de filtrage par interpolation (302, 302'), sensibles auxdites valeurs d'échantillons de signal numérique dudit flux d'échantillons d'entrée pour produire un premier flux d'échantillons dérivé composé de valeurs d'échantillons de signal numérique dans lequel ladite période d'échantillonnage donnée P dudit flux d'entrée est multipliée directement par un facteur égal à M'/CL, où C est un entier positif donné, et M' est inférieur à CL, soit $2^n(M'/CL)$ ou $2^{-n}(M'/CL)$ est égal à M/L et la valeur absolue de n est un entier parmi un nombre entier quelconque y compris zéro, de telle façon que la période d'échantillonnage dudit premier flux d'échantillons dérivé soit (M'/CL)P ; et

des deuxièmes moyens comprenant des moyens d'échantillonnage et de préfiltrage d'octave (306, 306', 308, 308'), sensibles audit premier flux d'échantillons dérivé des valeurs d'échantillons de signal numérique pour produire en sortie un deuxième flux d'échantillons dérivé des valeurs d'échantillons de signal numérique dans lequel ladite première période d'échantillonnage dérivé (M'/CL)P dudit premier flux d'échantillons dérivé est multiplié par un facteur égal soit à $2^n$ ou $2^{-n}$, de telle sorte que la période d'échantillonnage dudit deuxième flux d'échantillons dérivé soit (M/L)P.

**2.** L'appareil défini à la revendication 1, dans lequel :

ledit M est un deuxième entier positif qui est inférieur en valeur à la valeur dudit premier entier positif L ; et

la valeur dudit entier positif donné C est un; de sorte que $2^{-n}(M'/L)=M/L$ .

3. L'appareil défini à la revendication 2, dans lequel la valeur de n est égal à zéro de sorte qu'aucune multiplication ne se produise et que $M'/L=M/L$ .

4. L'appareil défini à la revendication 1, dans lequel:

ledit M est un deuxième entier positif qui peut être soit inférieur en valeur, soit supérieur en valeur à la valeur dudit premier entier positif L ; la valeur dudit entier positif donné C est de deux ; et
la valeur absolue de n est au moins égal à un ; de sorte que $2^{n}(M'/2L)=M/L$ lorsque M<L et $2^{-n}(M'/2L)=M/L$ lorsque M>L.

5. L'appareil défini à la revendication 1, dans lequel :

lesdits moyens de filtrage d'interpolation comportent des troisièmes moyens qui, pendant chacun des intervalles d'échantillonnage successifs égaux en longueur à (M')P périodes d'échantillonnages données dudit flux d'entrée, sont sensibles à chacun parmi une série de M'+1 échantillons qui apparaissent pour ladite période d'échantillonnage donnée P, dans lequel les valeurs respectives d'échantillons de cette série de M'+1 échantillons sont $v_1$, $v_2$, $v_3$ ...... $v_{M'-1}$, $v_{M'}$ et $v_{M'+1}$, et
lesdits troisièmes moyens insèrent CL-1 échantillons interpolés, apparaissant à une période d'échantillonnage interpolée égale à (M'/CL)P, entre le premier échantillon et le (M'+1)ième échantillon de cette série, avec chacun desdits échantillons interpolés ayant une valeur d'échantillon interpolée qui est une fonction particulière des valeurs d'échantillon respectives $v_1$, $v_2$, $v_3$...... $v_{M-1}$, $v_{M'}$ et $v_{M'+1}$ qui dépend de la position ordinale de cet échantillon interpolé.

6. L'appareil défini à la revendication 5, dans lequel :

la valeur d'échantillon interpolé de chacun desdits CL-1 échantillons interpolés insérés par lesdits troisièmes moyens est sensiblement une interpolation linéaire entre cette valeur d'échantillon particulière $v_1$, $v_2$, $v_3$.......$v_{M-1}$ ou $v_M$ de cet échantillon ordinal desdites séries qui précèdent immédiatement cet échantillon interpolé et cette valeur d'échantillon particulière $v_2$, $v_3$ ...... $v_{M'-1}$ ou $v_{M'+1}$ de cet échantillon ordinal de ladite série qui suit immédiatement cet échantillon interpolé.

7. L'appareil défini à la revendication 1, dans lequel lesdits deuxièmes moyens comportent un filtre numérique à dérivation T présentant une caractéristique symétrique de filtrage passe-bas aux fréquences de bande de base définies par les valeurs respectives de chacun des coefficients de pondération de fonction-noyau T, où T peut être soit un entier multiple donné impair ou pair présentant une valeur d'au moins trois et/ou la valeur de n est au moins égale à deux ; et dans lequel ledit filtre numérique à dérivation T comporte :

un nombre total de moyens de retard de N échantillons égal en nombre à seulement la partie entière de T/2, N étant un nombre donné d'au moins un, de sorte que ledit filtre comporte un seul moyen de retard de N échantillons lorsque ledit entier multiple donné présente une valeur de deux ou de trois et comporte une pluralité de moyens de retard de N échantillons lorsque ledit entier multiple donné présente une valeur supérieure à trois, et ladite pluralité de moyens de retard de N échantillons sont connectables en série, dans l'ordre, lorsque ledit entier multiple donné présente une valeur supérieure à trois.

8. L'appareil défini à la revendication 1 ou 7, dans lequel lesdites valeurs d'échantillons dudit flux d'entrée comporte des valeurs d'échantillons de la période d'un pixel dans la dimension horizontale (X) et des valeurs d'échantillons de la période d'une ligne de balayage dans la dimension verticale (Y) de l'information bidimensionnelle (X, Y) d'image vidéo, et ladite dimension donnée de ladite information image-vidéo est ladite dimension verticale (Y) de l'image, de sorte que ladite période d'échantillonnage donnée P soit ladite période de ligne de balayage et qu'une série de N valeurs successives d'échantillonnage de pixels apparaissent pendant chaque période de ligne de balayage P.

9. L'appareil défini à la revendication 7, dans lequel ledit filtre numérique à dérivation T comporte en outre :

des premiers moyens de filtrage comprenant un additionneur associé à l'entrée de chacun dudit nombre total de moyens de retard de N échantillons pour appliquer un flux de valeurs d'échantillons pondérées-coefficient de fonction-noyau à l'entrée de celui des moyens de retard de N échantillons auquel ils sont associés ;
des deuxièmes moyens de filtrage associés à la sortie de chacun dudit nombre total de moyens de retard de N échantillons, lesdits deuxièmes moyens de filtrage étant sensibles à des premiers signaux de contrôle moyen qui leur sont appliqués pendant chacun des cycles successifs de fonctionnement dudit filtre pour sélectivement, pendant ce cycle, soit faire recirculer le flux des valeurs d'échantillons pondérées-coefficient de fonction-noyau émergeant de la sortie de ces moyens de retard de N échantillons avec lesquels ils sont associés en retour comme une entrée vers l'additionneur des premiers moyens de filtrage qui leur sont associés ou, en variante, pour expédier le flux des valeurs d'échantillons pondérées-coefficient de fonction-de noyau émergeant de la sortie de ces moyens de retard de N échantillons auxquels ils sont associés, de sorte à appliquer la sortie de chacun des moyens ordinaux de retard de N échantillons précédant le dernier moyen ordinal de retard comme une entrée vers l'additionneur des premiers moyens de filtrage associés avec des moyens de retard de N échantillons immédiatement suivants, et à appliquer la sortie des derniers moyens ordinaux de retard de N échantillons comme ledit flux de sortie dudit filtre ; et

des troisièmes moyens de filtrage sensibles à des deuxièmes signaux de contrôle de cadencement qui leur sont appliqués pendant chacun desdits cycles successifs de fonctionnement dudit filtre pour sélectivement, pendant des cycles sélectionnés, contrôler l'application de chacun des flux individuels de valeurs d'échantillons pondérées-coefficient fonction-noyau, correspondant à certains valeurs d'échantillons dudit premier flux d'échantillons dérivé, comme une entrée uniquement à l'additionneur de celui parmi lesdits premiers moyens d'entrée de filtrage qui y corresponde ;

de sorte que l'on puisse faire varier la valeur de n, et par conséquent la quantité de multiplication réalisée par ledit filtre, sans modification structurelle, uniquement en contrôlant la séquence des premiers et deuxièmes signaux respectifs de contrôle de cadencement appliqués au filtre pendant lesdits cycles successifs de fonctionnement dudit filtre.

**10.** L'appareil défini à la revendication 9, où T est un entier multiple impair donné, et dans lequel :

lesdits deuxièmes moyens de filtrage associés à la sortie du dernier moyen de retard ordinal parmi les moyens de retard de N échantillons comportent un additionneur auquel la sortie de dernier moyen ordinal de retard de N échantillons est appliquée en entrée et dont la sortie constitue ledit flux de sortie dudit filtre ; et lesdits troisièmes moyens de filtrage sont sensibles à des deuxièmes signaux de contrôle de cadencement qui leur sont appliqués pendant chacun desdits cycles successifs de fonctionnement dudit filtre pour sélectivement, pendant des cycles sélectionnés, contrôler l'application d'un flux additionnel d'entrée de valeurs d'échantillons pondérées-coefficient de fonction-noyau, correspondant à certaines valeurs d'échantillons dudit premier flux d'échantillons dérivé, comme une entrée pour l'additionneur desdits deuxièmes moyens de filtrage associés à la sortie du dernier moyen ordinal de retard parmi les moyens de retard de N échantillons.

FIGURE 1

EP 0 694 188 B1

EP 0 694 188 B1

IN $\xrightarrow{\text{P}}$ | ↑ L | 200 → | Filter L | 202 → | Filter M | 204 → | ↓ M | 206 $\xrightarrow{\text{(M/L)P}}$ OUT

Composite
Filter

**FIGURE 2**

↓ = REDUCE=+n

↑ = EXPAND=-n

IN $\xrightarrow{\text{P}}$ | ↑ 2L | 300 → | I(f) | 302 → | ↓ M' | 304 $\xrightarrow{\text{(M'/2L)P}}$ | H(f) | 306 → | $2^n$ (|n|≥1) | 308 $\xrightarrow{\text{(M/L)P}}$ OUT

Composite

Composite

**FIGURE 3**

FIGURE 3a

EP 0 694 188 B1

FIGURE 6c

L1 ——————————

L2 —————— X ——————

L3 ——————————

L4 —————— X ——————

L5 ——————————

L6 —————— X ——————

L7 ——————————

L8 —————— X ——————

Y1 ——

400

Y2 ——

402

## FIGURE 4

L1 ——————————

L2 — — — — —

L3 ——————————

L4 — — — — —

L5 ——————————

L6 — — — — —

L7 ——————————

L8 — — — — —

Y1 ——

404

Y2 ——

406

## FIGURE 4a

FIGURE 5a

FIGURE 5b

EP 0 694 188 B1

FIGURE 5c

Input Lines

...L17,L16,L15....L3,L2,L1 → TIME

506-3 ← zero

mux

⊗ 500-1    ⊕ 502-1    N-sample delay 1  504-1    mux 506-4 ← zero

mux 506c-1

b c d e f g h i ← TIME

506-5 ← zero

mux

⊕ 502-2    N-sample delay 2  504-2    zero    mux 506-6

...L25,L24,L23....L11,L10,L9 → TIME

⊗ 500-2

mux 506c-2

h g f e d c b a ← TIME

⊕ 502-3

Output Lines

Y1, Y2, Y3,Y4,...

...L33,L25,L17 → TIME

⊗ 500-3

i

EP 0 694 188 B1

FIGURE 6a

Multiplexed
Input Pixels

...Pq2,Pi2,Pq1,Pi1
← TIME

...Pq4,Pi4,Pq3,Pi3
← TIME

...Pq7,Pi7,Pq5,Pi5
← TIME

606'-3

Cli

zero

602-1

600-1

604i-1

1-pixel delay 1

mux

606a-1

b    c
← TIME

zero

606'-4

604q-1

Clq

1-pixel delay 1

602-2

606'-5

zero

604i-2

1-pixel delay 2

mux

606'-6

zero

604q-2

1-pixel delay 2

600-2

mux

606a-2

b    a
← TIME

600-3

c

602-3

Multiplexed
Output Pixels

Xa1,Xb1,Xa2,Xb2...

FIGURE 6b